(19) Europäisches Patentamt
European Patent Office
Office européen des brevets

(11) Publication number : 0 242 949 B1

(12) EUROPEAN PATENT SPECIFICATION

(45) Date of publication of patent specification : 11.09.91 Bulletin 91/37

(51) Int. Cl.$^5$ : C08L 79/08, C08L 79/04, C08J 5/18

(21) Application number : 87301367.6

(22) Date of filing : 17.02.87

# (54) Compositions of aromatic polybenzimidazoles and aromatic polyimides or aromatic polyetherimides.

(30) Priority : 19.02.86 US 831385
19.02.86 US 831389

(43) Date of publication of application : 28.10.87 Bulletin 87/44

(45) Publication of the grant of the patent : 11.09.91 Bulletin 91/37

(84) Designated Contracting States : DE FR GB

(56) References cited :
GB-A- 1 226 711
GB-A- 1 237 004

(73) Proprietor : HOECHST CELANESE CORPORATION
1211 Avenue of the Americas
New York, New York 10036 (US)
Proprietor : Williams, David
1050 Bay Road
Amherst Massachusetts (US)
Proprietor : Leung, Louis
8D, 2nd. Floor Wang Fung Tr., Tai Hang Road
Hong Kong (HK)
Proprietor : Karasz, Frank E.
85, Lessey Street
Amherst Massachusetts (US)
Proprietor : Macknight, William
127 Sunset Avenue
Amherst Massachusetts (US)

(72) Inventor : Williams, David J.
1050 Bay Road
Amherst Massachusetts (US)
Inventor : Leung, Louis
8D, 2nd Floor Wang Fung Tr. Tai Hang Road
Hong Kong (HK)
Inventor : Karasz, Frank E.
85 Lessey Street
Amherst Massachusetts (US)
Inventor : MacKnight, William
127 Sunset Avenue
Amherst Massachusetts (US)
Inventor : Jaffe, Michael
215 Wyoming Avenue
Maplewood New Jersey (US)

(74) Representative : De Minvielle-Devaux, Ian Benedict Peter et al
CARPMAELS & RANSFORD 43, Bloomsbury Square
London WC1A 2RA (GB)

EP 0 242 949 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention is concerned with novel compositions comprising an aromatic polyimide or aromatic polyetherimide and an aromatic polybenzimidazole. The novel compositions are suitable for the formation of films, coatings, molding compositions, and the like.

This invention was made with United States Government support under Contract No. F49620-84-C-0051 awarded by the Department of Defense (DOD). The United States Government has certain rights in this invention.

## BACKGROUND OF THE INVENTION

The number of known classes of high performance polymers which are useful under severe environmental condition is limited. In addition, some of the known classes of polymers are deficient in some properties, e.g. impact resistance, solvent resistance,and processability. Some are also quite expensive.

## PRIOR ART

The aromatic polyimides (PI) and aromatic polyetherimides (PEI) are series of high-performance polymers.

The polyimides generally have high heat resistance, high strength-to-weight ratio, high modulus, excellent flammability characteristics, low smoke evolution, high dielectric strength, and stable dielectric constants and dissipation factors over a wide range of temperatures and frequencies.

One class of polyetherimides is available from General Electric under the tradename of Ultem®. For relatively inexpensive polymers, they have high heat resistance, high strength-to-weight ratio, high modulus, excellent non-flammability characteristics, processability on conventional molding equipment, low smoke evolution, high dielectric strength, and stable dielectric constant and dissipation factor over a wide range of temperatures and frequencies. They have generally good resistance to chemicals with the exception of chlorinated solvents, ethylene glycol antifreeze, brake fluid, and N,N-dimethylformamide, among others. [Product Guide to Ultem® and Material Safety Data, General Electric (1983)]. However, the utility of the aromatic polyetherimides is severely limited in the aerospace industry, where resistance to paint strippers such as methylene chloride is required.

Aromatic polybenzimidazoles (PBI) are characterized by a high degree of thermal stability. They may be shaped to form films and other articles of wide utility which show resistance to degradation by heat, hydrolytic media and oxidizing media. However, many of the polybenzimidazoles are not sufficiently thermoplastic at desirably low temperatures and pressures for molding.

Aromatic polybenzimidazole (PBI) available from Celanese Corporation has the following repeating unit formula :

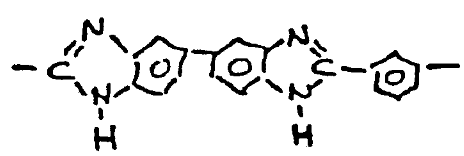

It too has high heat and chemical resistance, and dielectric strength. Unfortunately, the aromatic polybenzimidazoles have relatively high moisture regain, which although desirable for textile fibers, is undesirable for engineering plastics. In addition, they are rather expensive polymers.

A review of the processes for the preparation of aromatic linear condensation polyimides is contained in J.P. Critchley, G.J. Knight and W.W. Wright, Heat-Resistant Polymers - Technologically Useful Materials, Plenum Press, New York (1983), 186-211.

The procedures to synthesize aromatic polyetherimides were fully described by White et al.. [D.M. White et al., J. Polymer Sci. - Chem 19, 1635 (1981)]. The reaction [T.Takekoshi et al., ACS preprint, 20(1), Honolulu 1979; D.M. White, U.S. patent Nos. 4,324,883; 4,324,884; 4,324,885; 4330,666 (1982)] involves a two-step displacement polymerization: (1) cyclization and (2) displacement [T. Takekoshi et al., ACS preprint 20(1), Honolulu (1979)]. Either one of the two steps can proceed before the other. For example, a diamine may be first reacted (cyclization) with 3- or 4- nitrophthalic anhydride (the 3- position is more reactive than the 4-position) to form disubstituted bisnitroimide, which is subsequently subjected to nitro-displacement polymerization with alkali metal salts of various bisphenols. Several methods can be used to generate the dianion. For example, the dianion of bisphenol may be prepared by adding sodium hydroxide or sodium methoxide to bisphenol A

under anhydrous conditions. The polymerization step generally proceeds rapidly under relatively mild conditions in dipolar aprotic solvents or in a mixture with toluene to form high molecular weight products. By varying the nature of the diamine and the position of substitution in the bis-imides and using different bisphenols, a large number of aromatic polyetherimides with a wide range of physical properties can be prepared [D.M. White et al., J.Polymer Sci. - Chem 19, 1635 (1981)].

Processes for the preparation of aromatic polybenzimidazoles are described in a number of U.S. Patents, e.g., 3,901,855; 4,002,679; 3,443,772; 3,441,640; 3,509,108; 3,526, 693; 3,549, 603; 3,552,389; 3,619,453;3,671,491; 3,969,430; and 4,020,142. In addition, a review of the processes for the preparation of aromatic polybenzimidazoles is contained in J.P. Critchley, G.J. Knight and W.W. Wright, Heat-Resistant Polymers - Technologically Useful Marterials, Plenum Press, New York (1983), 259-268. This reference makes the point that despite considerable research effort, polybenzimidazoles have not been commercially successful except as fibers and fabrics. On page 259, it states that polybenzimidazoles "have not been very substantial competitors" to the polyimides.

Unduly broad but unenabling suggestions about blending polymers exist in the literature, e.g., U.S.Patent 4,302,413 and "Product Guide to Ultem® and Material Safety Data", General Electric (1983), which states that the Ultem® polyetherimides "may be ... compounded with other polymers to produce unique resin blends and alloys". However, most pairs of polymers tend to be totally immiscible [Fred W. Billmeyer, Jr., Textbook of Polymer Science, Wiley-Interscience, New York (1984), 176]. It is also known that even many polyimides are not miscible with each other. It is therefore surprising that the compositions of the present invention are miscible and also surprising that there are synergistic ameliorative effects of one polymer on the other's weak properties, as detailed below.

U.S.S.R. Inventor's Certificate SU 1016321 A, entitled "Procedure for the production of Film Materials Based on Aromatic Polybenzimidazole" describes dissolving a polybenzimidazole in N,N-dimethylformamide and then dissolving a poly-bis-maleimide in the solution, and pouring the solution onto a glass palte. After 3-4 hours the film is removed from the plate and heated at 180°C. The poly-bis-maleimide is an oligomer of rather low molecular weight, which is addition polymerized to produce a crosslinked structure of essentially infinite molecular weight after it is blended with the polybenzimidazole. In contrast, the aromatic polyimides or polyetherimides used in the compositions of the present invention are high molecular weight, linear, condensation polymers. Furthermore, the imide ring in the bis-maleimide is linked to an aliphatic group; whereas in the aromatic polyimides or polyetherimides used in the present invention, the imide ring forms a fused ring structure with an aromatic moiety. The composition of the U.S.S.R. Inventor's Certificate is apparently cross-linked to form a thermoset resin, whereas the preferred compositions of the present invention remain essentially linear in structure throughout their processing cycle.

Japanese Patent Publication No. 17468 (1973), entitled "Polybenzimidazole Molding Material", describes mixing a polybenzimidazole and a nylon, e.g. nylon 6 or nylon 66, in a solvent such as N,N-dimethylformamide or N, N-dimethylacetamide, kneading the mixture, dropping the kneaded mixture into water, and then heating the mixture at 200°C under vacuum to remove water and N,N-dimethylacetamide. The resulting material was ground to obtain molding material of 15 mesh particle size. It is apparent from the reference that a miscible blend is not formed but rather a non-miscible dough-like mass, which must be kneaded to effect the physical admixture.

## SUMMARY OF THE INVENTION

Despite the fact that most pairs of polymers tend to be immiscible, we have discovered unexpectedly that certain aromatic polyimides or aromatic polyetherimides and certain aromatic polybenzimidazoles are miscible in all proportions.

Briefly, the invention comprises novel compositions comprising from 1 part by weight to 99 parts by weight of an aromatic polyimide or aromatic polyetherimide and from 99 parts by weight to 1 part by weight of an aromatic polybenzimidazole. Preferably, the composition comprises from 5 parts by weight to 95 parts by weight of an aromatic polyimide or aromatic polyetherimide and from 95 parts by weight to 5 parts by weight of an aromatic polybenzimidazole. Most preferably, the composition comprises at least 25 parts by weight of an aromatic polybenzimidazole or at least 10 parts by weight of a soluble thermoplastic aromatic polyimide or an aromatic polyetherimide.

The compositions of the invention may be in phase separated form.

A film may be prepared from a composition of the invention. Such a film may be heat-treated above its glass transition temperature to cause it to phase separate and then quickly quench-cooled to freeze its phase separated morphology.

Generally, to prepare miscible compositions of the invention from soluble thermoplastic aromatic

polyimides and an aromatic polybenzimidazole, at different weight compositions, the aromatic polybenzimidazole and a soluble thermoplastic aromatic polyimide or an aromatic polyetherimide may be first dissolved in a mutual solvent, e.g., N,N-dimethylformamide, N,N-dimethylacetamide or N- methylpyrrolidone, so that each polymer is present in the resulting solution at the desired concentrations of from 1% to 30% each on a weight/volume basis, preferably from 1% to 15% each. Then the solution may be added to a non-solvent for the composition, e.g., methanol, to precipitate a novel composition of this invention in the desired concentration. Subsequently, the precipitated composition is washed with e.g., methanol or water, to remove residual solvent and then, e.g., vacuum-dried at moderate temperatures. Alternatively, films of the solution of the composition can be cast and the solvent evaporated. Trace amounts of solvent may be removed by washing the film with hot water.

The polyamic acid process for preparing miscible compositions broadly comprises dissolving an aromatic polybenzimidazole and an aromatic polyimide in its precursor polyamic acid form in a mutual solvent in relative weight proportions to each other of from 1 to 99 of the aromatic polybenzimidazole to 99 to 1 of the polyamic acid, casting a film, removing the solvent, and then cyclizing to form the polyimide.

The miscible compositions of the invention containing polyetherimides may be prepared by a process which comprises dissolving an aromatic polybenzimidazole and an aromatic polyetherimide in a mutual solvent in relative weight proportions to each other of from 1 to 99 of the aromatic polybenzimidazole to 99 to 1 of the aromatic polyetherimide and then adding the solution to a non-solution to a non-solvent for the composition to precipitate the novel composition and subsequently drying the composition.

The novel compositions of this invention have unexpected properties and benefits. The compositions are useful under severe environmental conditions. The compositions have good impact resistance, solvent resistance, and good performance characteristics.

Although aromatic polybenzimidazoles generally have high glass transition temperatures and good solvent resistance, they are expensive and are moisture sensitive, i.e. they have high moisture regain. Soluble, thermoplastic aromatic polyimides generally have lower glass transition temperatures and lack resistance to certain solvents. Aromatic polyetherimides generally have relatively low glass transition temperatures and lack resistance to certain solvents, but they are tractable polymers and are much less expensive than aromatic polybenzimidazoles.

Therefore, it is an object of this invention to provide compositions of aromatic polybenzimidazoles and soluble thermplastic aromatic polyimides or aromatic polyetherimides, which have higher glass transition temperatures and better solvent resistance than the soluble thermoplastic polyimides or the aromatic polyetherimides.

It is a further object of this invention to provide compositions of aromatic polybenzimidazoles and aromatic polyimide or aromatic polyetherimides which are useful in molding processes and in applications where the polybenzimidazoles themselves were either not useful or not as useful.

By means of the invention, it is possible to make the aromatic polybenzimidazole more tractable and thermally processable and also less susceptible to moisture, by providing a composition which is mostly comprised of the aromatic polybenzimidazole, a thermoplastic aromatic polyimide or aromatic polyetherimide being present in the composition in an amount sufficient to achieve such results.

By means of the invention, it is possible to make a thermoplastic aromatic polyimide or aromatic polyetherimide less sensitive to solvents and also to increase the glass transition temperature of the polyimide or polyetherimide, by providing a composition which is mostly comprised of the thermoplastic aromatic polyimide or aromatic polyetherimide, an aromatic polybenzimidazole being present in the composition in an amount sufficient to achieve these results.

By means of the invention, it is possible to make a soluble thermoplastic aromatic polyimide less sensitive to solvents and also to increase the glass transition temperature of the polyimide, by providing a composition which is mostly comprised of the soluble thermoplastic aromatic polyimide, an aromatic polybenzimidazole being present in the composition in an amount sufficient to achieve these results.

## BRIEF DESCRIPTION OF THE FIGURES

Figure 1 shows the single intermediate glass transitions, indicating miscibility, determined from differential scanning calorimetry scans for Celanese polybenzimidazole-Ciba-Geigy XU-218 aromatic polyimide compositions ranging from 10% to 50% of XU-218 polyimide.

Figure 2 shows the mechanical properties data (strength and modulus), displaying rule of mixtures behaviour for the blends, which also indicates blend miscibility.

Figure 3 shows the tan spectra for XU-218 aromatic polyimide, Celanese PBI and a 50/50 blend of the two polymers that had been heated to 350°C., cooled and then scanned.

Figure 4 shows the tan spectra of films that were first thermally aged by heating in the Dynamic Mechanical Thermal Analyzer at 4°C./minute to 380°, 400° and 450°C.and then cooled to 50°C.

Figure 5 shows the thermal stability of aromatic polybenzimidazole relative to the thermal stabilities of Ultem® 1000, D5000, and 6000 aromatic polyetherimides. The thermal stabilities of those three members of the family of Ultem® polyetherimides are essentially equivalent, as shown in Table 5.

Figure 6 was constructed from single glass transition values obtained during the single differential scanning calorimetry scans which were run on compositions ranging from about 5% to 95% Ultem® 1000 polyetherimide.

Figure 7 presents data from a phase separation study of a 50/50 miscible blend conducted in the Differential Scanning Calorimeter (DSC) under nitrogen and at ambient pressure.

Figure 8 shows the physical properties of blends of Celanese PBI and Ultem® 1000 polyetherimide. The Ultem® 1000 had slightly less strength than the PBI, and the properties of the blends fell in between with a straight line relationship.

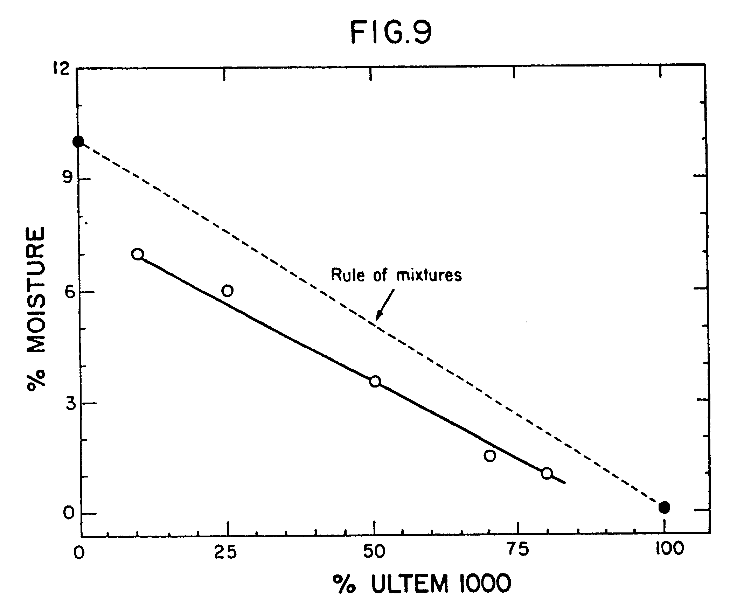

Figure 9 records the moisture weight loss data determined for films with the compositions shown in the Figure compared to films of 100% Celanese polybenzimidazole and 100% Ultem® 1000 polyetherimide, respectively. Strips of polybenzimidazole - Ultem® 1000 miscible films were immersed in water at 70° C for 16 to 18 hours. After this immersion period, the surface water was removed by drying the films with paper toweling. The water weight loss was determined by thermal gravimetric analysis in the 50° to 200°C temperature range with a heating rate of 10°C/min under nitrogen. It is apparent that the blended films had a lower moisture regain than that predicted by a rule of mixture linear interpolation.

## DESCRIPTION OF THE PREFERRED EMBODIMENT

Aromatic polyimides which may be used in the compositions and processes of this invention have repeating units of the following formula

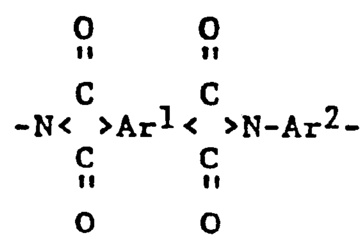

wherein >$Ar^1$< represents

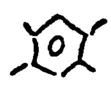 , 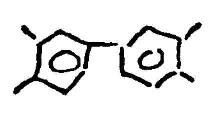 , 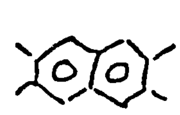 , 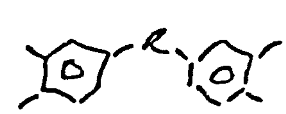

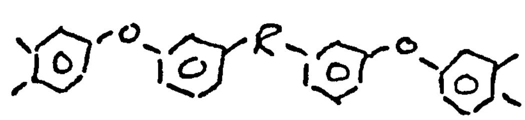 , or 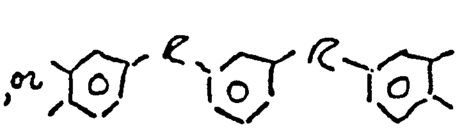

moieties or mixtures thereof;
wherein -$Ar^2$- represents

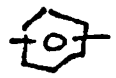, 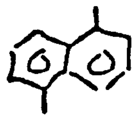, 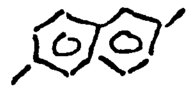, 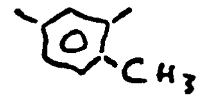,

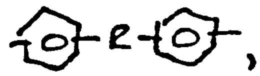, 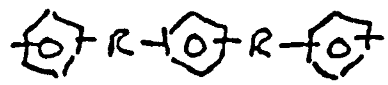, 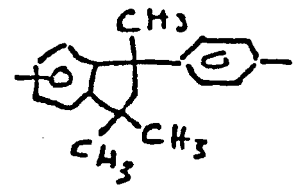,

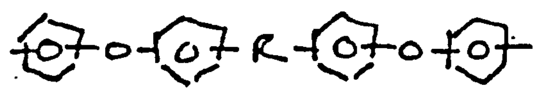, or 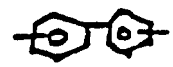

moieties or mixtures thereof, wherein R is -O-, -S-, $-(CH_2)_x-$, $-(CF_2)_x-$, $-[SiOR^1_2]_x-$, >C-OH, >C=O, >$SO_2$, >$C(CH_3)_2$, >$C(CF_3)_2$, >$C(CF_3)(C_6H_5)$, or mixtures thereof, and wherein $R^1$ is $-CH_3$, $-C_6H_5$, $-C_6H_4-CH_3$ or a mixture thereof, x having a value of from 1 to 6.

Aromatic polyimides vary widely in their solubility and thermoplasticity. They may be classified into three types:

(a) soluble and thermoplastic,
(b) thermoplastic but non-soluble,and
(c) non-thermoplastic and non-soluble.

The aromatic polyimides of type (a) generally have lower glass transitions than type (c), and they are available and tractable in their fully imidized form. The soluble, thermoplastic aromatic polyimides [type (a)] are actually only soluble in a few selected polar solvents, such as chlorinated hydrocarbons, N,N-dimethylacetamide and metacresol. This solubility allows them to be processed in solution into films and coatings, but it also limits the environments in which they can be utilized. The ease with which they can be thermally processed generally depends on their relative glass transition temperatures. The thermoplastic but non-soluble aromatic polyimides [type (b)] also have lower glass transition temperatures than type (c) and may be thermally processed. They may also be processed in their soluble polyamic acid precursor form. The non-thermoplastic, non-soluble aromatic polyimides [type (c)] generally must be processed in their soluble polyamic acid precursor form. The glass transitions of the type (c) polyimides are on the order of those of the aromatic polybenzimidazole available from Celanese, i.e. over 400°C.

Preferred aromatic polyamides which may be used and blended in solution to form the compositions of this invention are those which are soluble and thermoplastic [type (a)]. Some examples of these have the following repeat units. The listed commercially available variants are the most preferred.

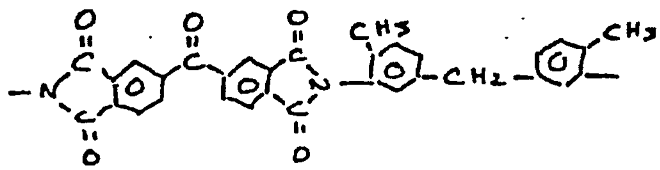

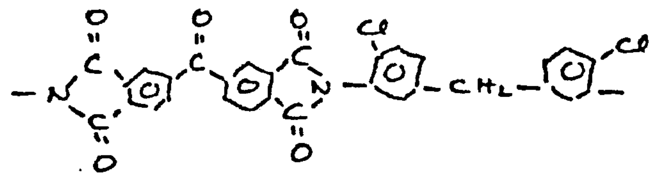

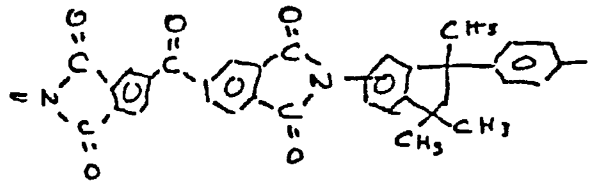

Ciba-Geigy XU-218
$T_g$ = 320°C

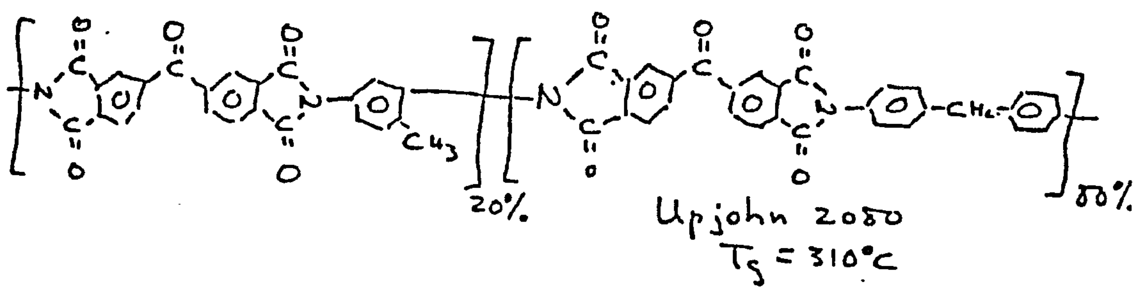

Upjohn 2080
$T_g$ = 310°C

Also preferred are thermoplastic, non-soluble aromatic polyimides [type (b)] which may be blended by thermal compounding methods or which may be blended in solution in their polyamic acid precursor form. Preferred examples of this type have the repeating units given below :

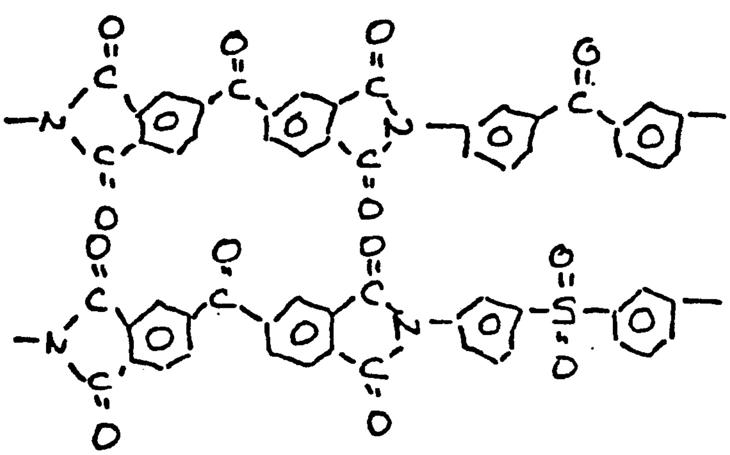

LaRC TPI
$T_g$ = 264°C

PISO
$T_g$ = 273°C

The non-thermoplastic and non-soluble aromatic polyimides [type (c)] are generally not preferred embodiments of this invention because their glass transitions are similar in value to polybenzimidazoles, but they may impart desirable properties such as solvent resistance to the aromatic polybenzimidazoles.

Although other classes of aromatic polyetherimides may be used in the compositions of this invention, preferred aromatic polyetherimides which may be used in the compositions and processes of this invention have repeating units of the following formula

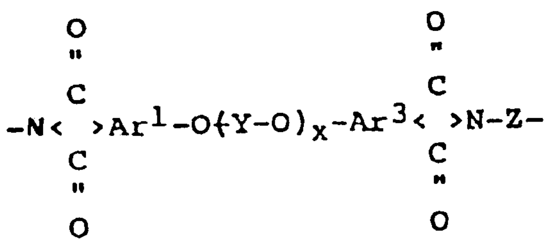

wherein $>Ar^1-$ and $>Ar^3-$ represent trivalent aromatic moieties or mixtures thereof; wherein Y represents divalent aromatic moieties $-Ar^2-$, or divalent aliphatic moieties $R^1$ containing up to 6 carbon atoms, or mixtures thereof; wherein Z represents aromatic moieties $-Ar^4-$, or divalent aliphatic moieties $R^2$ containing up to 6 carbon atoms, or mixtures thereof; and wherein x is the number of repeating units and may have a value of 0 or a positive integer.

The Ultem® polyetherimides from General Electric are the most preferred polyetherimides. Their different grades of aromatic polyetherimides, e.g., Ultem® 1000, D5000 and 6000, may be blended in different compositions as described below. Ultem® 1000 is an amorphous homopolymer with a weight average molecular weight of about 30,000 ± 10,000. It has the following formula :

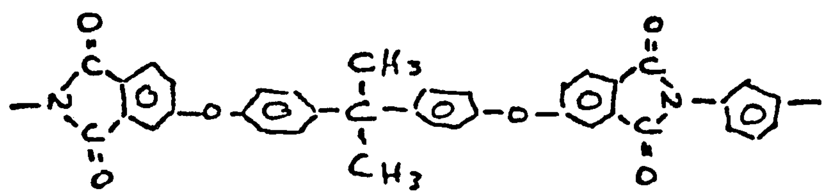

Ultem® 6000 and D5000 are copolymers. Elemental analysis data for these polymers are given in Table 3. The glass transition temperatures, as determined by Differential Scanning Calorimetry, are shown in Table 2 as 217°,223° and 233° C for Ultem® 1000, D5000 and 6000, respectively. As shown in Table 5, their thermal stabilities are equivalent to each other, and their stabilities relative to aromatic polybenzimidazole are shown in Figure 5.

The aromatic polyetherimides are only soluble in a few selected solvents. Both the Ultem® 1000 and 6000 dissolved readily in methylene chloride, chloroform,N,N-dimethylformamide and N,N-dimethylacetamide. Heating was required for Ultem® 6000 in order to obtain a clear solution. The D5000, ostensibly designed to be solvent resistant, was soluble in hot chloroform. The utility of the aromatic polyetherimides is severely limited in the aerospace industry, where resistance to paint strippers such as methylene chloride is required.

Although any aromatic polybenzimidazole described in the prior art may be used, the preferred aromatic polybenzimidazoles employed as starting materials to prepare the novel compositions of the present invention are those having the repeating unit formula :

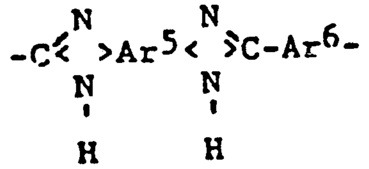

wherein $>Ar^5<$ represents a tetravalent aromatic moiety having the formula

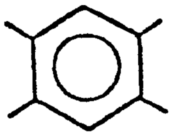 , 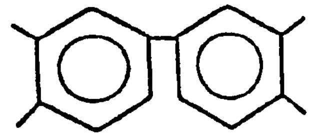 or 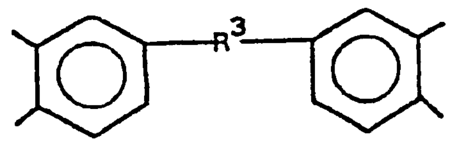

wherein $R^3$ is -O-, $-SO_2-$, or (-CH2-)x and x is a positive integer; and $-Ar^6-$ represents a divalent aromatic moiety having the formula

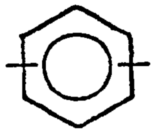 , 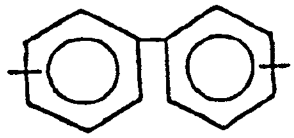 , 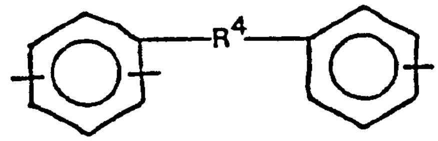

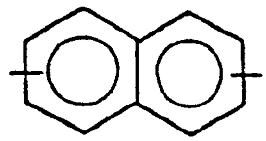 or 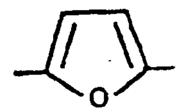

wherein $R^4$ is -O-, (-CH2-)x, or $-Si(CH_3)_2-O-Si(CH_3)_2-$ and x is a positive value.

Examples of the more preferred aromatic polybenzimidozoles which may be used in the compositions of the present invention include :

poly-2,2′-(m-phenylene)-5,5′ bibenzimidazole ;
poly-2,2′-(pyridylene-3″,5″)-5,5′-bibenzimidazole;
poly-2,2′-(furylene-2″,5″)-5,5′-bibenzimidazole;
poly-2,2′-(naphthalene-1″,6″)-5,5′-bibenzimidazole;
poly-2,2′-(biphenylene-4″,4″)-5,5′-bibenzimidazole;
poly-2,6′-(m-phenylene)-diimidazobenzene;
poly-2,2′-(m-phenylene)-5,5′-di(benzimidazole)ether;
poly-2,2′-(m-phenylene)-5,5′-di(benzimidazole) sulfide;
poly-2,2′-(m-phenylene)-5,5′-di(benzimidazole) sulfone,
poly-2,2′-(m-phenylene)-5,5′-di(benzimidazole)methane;
poly-2,2′-(m-phenylene)-5,5″ di(benzimidazole)propane-2,2;
and
poly-2,2″-(m-phenylene)-5,5″ di(benzimidazole)ethylene-1,2

where the double bonds of the ethylene groups are intact in the final polymer.

Poly-2,2′-(m-phenylene)-5,5′-bibenzimidazole, which contains recurring units of the formula:

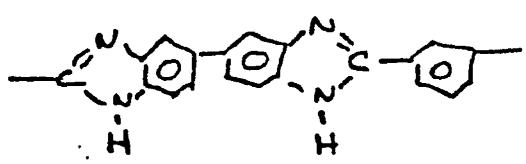

is most preferred. Aromatic polybenzimidazoles of this type are commercially available from Celanese Corporation. These polybenzimidazoles are preferred components of the compositions because they are relatively more thermally stable and more soluble in N,N-dimethylacetamide than other polybenzimidazoles. This desirable combination of thermal stability and solubility makes them relatively processable. In addition, they have higher molecular weights than other polybenzimidazoles.

The novel compositions comprise from 1 part by weight to 99 parts by weight of an aromatic polyimide or aromatic polyetherimide and from 99 parts by weight to 1 part by weight of an aromatic polybenzimidazole. Preferably, the compositions are comprised of from 5 parts by weight to 95 parts by weight of an aromatic polyimide or aromatic polyetherimide and from 95 parts by weight to 5 parts by weight of an aromatic polybenzimidazole. The more preferred compositions are those which are comprised mostly of either the aromatic polybenzimidazole or an aromatic polyetherimide or a soluble thermoplastic aromatic polyimide.

If a composition of the invention is mostly comprised of aromatic polybenzimidazole, it is preferred that the

minor amount of an aromatic polyetherimide or thermoplastic aromatic polyimide in the composition be sufficient to make the aromatic polybenzimidazole more tractable and thermally processable for molding purposes and also less susceptible to moisture. It is thought that the minor amount of the polyimide or polyetherimide accomplishes the amelioration of the processability of the aromatic polybenzimidazole by plasticizing the polybenzimidazole. More preferably, the compositions are comprised of from 65 parts by weight to 95 parts by weight of an aromatic polybenzimidazole and from 35 parts by weight to 5 parts by weight of an aromatic polyetherimide or a thermoplastic aromatic polyimide. Most preferably, the composition comprises at least 10 parts by weight of the aromatic polyetherimide or the thermoplastic aromatic polyimide. It is surprising that a minor amount of the polyetherimide or polyimide can ameliorate the weak properties of the polybenzimidazole i.e., poor thermoplasticity and moisture sensitivity or moisture regain, while resulting in a composition with a glass transition temperature not substantially below the glass transition temperature of the polybenzimidazole itself. At the same time the less expensive polyetherimide decreases the cost of the composition substanially below the cost of the polybenzimidazole.

If a composition of the invention is mostly comprised of an aromatic polyetherimide or a soluble thermoplastic aromatic polyimide, it is preferred that the minor amount of aromatic polybenzimidazole in the composition be sufficient to render the aromatic polyetherimide or the soluble thermoplastic aromatic polyimide less sensitive to solvents, e.g., chlorinated hydrocarbons. Preferably, the aromatic polybenzimidazole is present in an amount sufficient to result in a composition with greatly reduced solubility and low swelling i.e., minimal weight loss of a composition of the invention when it is immersed in a solvent which would ordinarily result in dissolving the aromatic polyetherimide or the soluble thermoplastic aromatic polyimide itself. More preferably, the compositions are comprised of from 65 parts by weight to 95 parts by weight of an aromatic polyetherimide or a soluble thermoplastic aromatic polyimide and from 35 parts by weight to 5 parts by weight of an aromatic polybenzimidazole. Most preferably, based on preliminary tests, the composition should contain at least 25 parts by weight of a polybenzimidazole in order to impart to the aromatic polyetherimide or the soluble thermoplastic aromatic polyimide component greatly enhanced solvent resistance. In addition to improving solvent resistance, greater amounts of aromatic polybenzimidazole in the composition substantially increase the glass transition temperature of the composition, giving improved performance and in some cases excellent price-performance results. At the current time, aromatic polybenzimidazoles are on the order of eight times the price of aromatic polyetherimides. Soluble thermoplastic aromatic polyimides are commercially successful because of their ease of processing and their generally good combination of properties, with the exception, of course, of their poorer solvent resistance e.g., to chlorinated hydrocarbons. Aromatic polyetherimides are commercially successful because of their generally good combination of properties, with the exception, of course, of poor resistance to solvents. Those properties can be substantially improved in accordance with this invention by incorporating a minor amount of aromatic polybenzimidazole in a miscible blend with the aromatic polyetherimide or the soluble, thermoplastic aromatic polyimide. It appears that all the beneficial properties of the aromatic polyetherimide or the soluble thermoplastic aromatic polyimides may be retained and solvent resistance and glass transition temperature improved for applications requiring high-performance polymers, particularly the aerospace industry. It is surprising that a minor amount of the polybenzimidazole can ameliorate the weak properties of the aromatic polyetherimide or the soluble thermoplastic aromatic polyimides,i.e., poor resistance to solvents and in the case of the polyetherimides relatively low glass transition temperature, without decreasing the processability of the polyetherimide or the polyimide itself. At the same time, a less expensive polyetherimide decreases the cost of the composition substantially below the cost of the polybenzimidazole.

In order to prepare miscible compositions of the invention from aromatic polyetherimides or soluble thermoplastic aromatic polyimides and, e.g., Celanese aromatic polybenzimidazole, at different weight compositions, the aromatic polybenzimidazole and an polyetherimide or a soluble thermoplastic aromatic polyimide may be first dissolved in a mutual solvent, e.g., N,N-dimethylformamide, N,N-dimethylacetamide or N-methylpyrrolidone, so that each polymer is present in the resulting solution at the desired concentration up to a total polymer concentration of from 1% to 30% on a weight/volume basis, preferably from 1% to 15% each. It is preferred that the total concentration of the two polymers in the solution be such that the viscosity of the solution is acceptable for subsequent processing. The two polymers may be simultaneously dissolved in the solvent; or each polymer may be separately dissolved in separate volumes of solvent, and desired portions of the resulting solutions can be mixed together to form a solution of the two polymers.

At low concentrations of polybenzimidazoles, it is not necessary to add lithium chloride to the solution. However, at higher concentrations, it may be desirable to add lithium chloride to improve the stability of the polybenzimidazole in the solution, as it might otherwise separate from the solution. It is preferable to avoid adding anything other than the constituent polymers to the solution in order to avoid the problem of removing it from the composition after the solvent is removed.

Then the solution may be added to a non-solvent for the composition, e.g., methanol, to precipitate a novel

composition of this invention with the desired ratio of component polymers. Subsequently, the precipitated composition is washed with, e.g., methanol or water, to remove residual solvent and lithium chloride if it is present and then, e.g., vacuum-dried at moderate temperatures. If films of the solution of the composition are cast, the solvent should be evaporated at low relative humidity,e.g., in a dry nitrogen atmosphere, and moderate temperatures,e.g., at about 100°C. After a substantial portion of the solvent is removed (e.g.,about 85%), the remaining solvent and any lithium chloride may be removed by washing the film with hot water. Whether the solution of the composition is cast or precipitated, moisture should be initially excluded until most of the solvent is removed. Also, the compositon should not be heated above its glass transition temperature or phase separation may result.

The polyamic acid process for preparing miscible compositions broadly comprises dissolving an aromatic polybenzimidazole and an aromatic polyimide in its precursor polyamic acid form in a mutual solvent in relative weight proportions to each other of from 1 to 99 of the aromatic polybenzimidazole to 99 to 1 of the polyamic acid, casting a film, removing the solvent, and then cyclizing to form the polyimide.

The generally accepted criteria for blend miscibility is a single glass transition which is intermediate to the glass transitions of the blend components. As a first approximation, the intermediate glass transition of the miscible blend will be close to that predicted by a linear interpolation between the glass transitions of the blend components. Non-miscible physical mixtures or phase separated blends will display two glass transitions, one corresponding to the composition of each phase. In the case of complete phase separation or total incompatibility, the two transitions will correspond to those of the blend or mixture components.

Figure 1 shows the single intermediate glass transitions determined from differential scanning calorimetry scans for Celanese polybenzimidazole-Ciba-Geigy XU-218 aromatic polyimide compositions ranging from 10% to 50% of XU-218 aromatic polyimide. Also, polybenzimidazole-XU-218 aromatic polyimide films ranging in composition from 10 to 90% XU-218 aromatic polyimide were prepared and found to be transparent and flexible, indicating complete miscibility. Thus, polybenzimidazole and XU-218 aromatic polyimide are apparently miscible in all proportions.

The data in Table 1, for a DSC study of a 50/50 blend of aromatic polybenzimidazole and aromatic XU-218 aromatic polyimide, shows a single intermediate glass transition of 380° C obtained during the first scan, indicative of blend miscibility. As the blend is thermally conditioned according to the schedule given in Table 1, the glass transition increases slowly up to 385°C with a 410°C conditioning temperature. It increases more rapidly at conditioning temperatures of 420°C and higher, indicating the onset of thermally induced crosslinking, until two glass transitions are observed at a conditioning temperature of 450°C. Thus, the phase boundary for this composition occurs between 440° and 450°C.

Figure 6 shows the single intermediate glass transitions determined from single differential scanning calorimetry scans for Celanese polybenzimidazole -Ultem® 1000 compositions ranging from 5% to 95% Ultem® 1000. Thus, polybenzimidazole and Ultem® 1000 are apparently miscible in all proportions. For this system, the glass transitions are slightly higher than those predicted by linear interpolation between the glass transitions of the component polymers.

Figure 7 presents data from a phase separation study of a 50/50 miscible blend of those components conducted in the Differential Scanning Calorimeter under nitrogen and at ambient pressure. The blend was thermally aged above the glass transition at the temperatures indicated in the Figure for 5 and 60 minutes. After aging, the blends were quench-cooled and a second scan was run at a heating rate of 25°C./min. Phase separation was evidenced by the appearance of two glass transitions during this second scan. The lower galss transition corresponded to that of Ultem® 1000. The higher glass transition was between that of the unannealed miscible blend and the polybenzimidazole. The composition of the higher glass transition phase was determined from Figure 6, and this composition was used to construct Figure 7.

Although the compositions of the invention are miscible in all proportions and are useful as such, useful phase-separated systems may be formed by heating the compositions above their binodal or spinodal phase boundary temperature or glass transition temperature and then rapidly quench-cooling them below their glass transition temperature to freeze the phase-separated morphology in place. The composition and properties of phase-separated systems can be controlled and varied according to the specific properties required, using pressure, temperature, time at the phase-separation conditions, and initial composition as variables. Obviously, innumerable combinations of these parameters can be employed to produce a wide assortment of potentially useful phase-separated systems.

Phase-separated systems have property synergisms when used at a temperature above the glass transition temperature of the thermoplastic aromatic polyimide or aromatic polyetherimide component of the composition. It is possible to obtain phase-separated compositions where the matrix polymer is either the aromatic polybenzimidazole or the thermoplastic aromatic polyimide or aromatic polyetherimide and the dispersed phase is the other polymer. This depends on which polymer is the preponderant component and the technique

employed to cause the phase separation. If the aromatic polybenzimidazole is the matrix polymer of the phase-separated composition, the thermoplastic aromatic polyimide or aromatic polyetherimide is the dispersed phase and the composition is used above the glass transition of the thermoplastic aromatic polyimide or aromatic polyetherimide, then the composition is an impact-resistant plastic. It, however, the thermoplastic aromatic polyimide or aromatic polyetherimide is the matrix polymer of the phase-separated composition, the aromatic polybenzimidazole is the dispersed phase and the composition is used above the glass transition of the thermoplastic aromatic polyimide or aromatic polyetherimide, then the composition is a reinforced rubber.

A number of uses are possible for the novel compositions of this invention. For example, they are potentially useful as films, coatings and thermoplastic molding compositions.

Novel compositions according to the present invention may also possess further utility in that they may undergo cross-linking if heated at a suitable temperature, thereby improving certain properties of the constituent polymers such as softening point and resistance to solvents under stress. Such a crosslinking technique could be applied to produce resins useful in fabricating articles which have excellent mechanical and electrical properties coupled with outstanding thermal characteristics and are particularly advantageous when used as insulation for electrical conductors because they exhibit high resistance to attack by solvents and to heat stress embrittlement.

The following examples describe the manner and process of making and using the invention and set forth the best mode contemplated by the inventors for carrying out the invention, but are not to be construed as limiting.

The invention is additionally illustrated in the following examples wherein the preferred aromatic polybenzimidazole polymer is used, namely, poly-2,2'-(m-phenylene)-5,5'-bibenzimidazole.

## EXAMPLE 1

Two soluble thermoplastic aromatic polyimides, Ciba-Geigy XY-218 and Upjohn 2080, were obtained and blended in different compositions with the polybenzimidazole as described below.

### Blends

The blends of aromatic polybenzimidazole and soluble thermoplastic aromatic polyimides were prepared by first dissolving the aromatic polybenzimidazole and soluble thermoplastic aromatic polyimide in N,N-dimethylacetamide so that each polymer was present in the resulting solution at the desired concentrations, e.g., 1% each on a weight/volume basis and then adding the solution to methanol to precipitate a novel composition of this invention in the desired concentration, e.g., a 50/50 blend.

Glass transition temperatures and annealing data for the XU- 218 polyimide/polybenzimidazole blends are shown in Table 1. The first DSC scan (no aging) shows a single intermediate glass transition of 380°C, indicating miscibility. As the sample is aged, according to the schedule shown, the glass transition increases slightly up to 385°C at an aging temperature of 410°C. The glass transition increases more rapidly as the aging temperature increases beyond 410°C, indicating the onset of crosslinking. At an aging temperature of 450°C, two glass transitions are observed, each approaching the glass transition of the components, thereby indicating the onset of phase separation.

Table 1

| Sample | Aging Conditions | ←-- Low | Tg Midpoint (°C) Intermediate | ----> High |
|---|---|---|---|---|
| 50/50 Blend | No | - | 380 | - |
| XU-218/PBI* | 380°C 5 min. | - | 380 | - |
| | 390°C 10 min. | - | 384 | - |
| | 400°C 5 min. | - | 386 | - |
| | 400°C 60 min. | - | 392 | - |
| | 410°C 5 min. | - | 385 | - |
| | 420°C 5 min. | - | 395 | - |
| | 440°C 5 min. | - | 404 | - |
| | 450°C 5 min. | (336) | | -(403,418) |
| | 450°C 30 min. | (310) | | - (410) |
| | 460°C 5 min. | | | - |
| | 470°C 5 min. | | | - |

* Prepared 1% of each polymer in N,N-Dimethylacetamide and precipated in methanol.

DSC Conditions : 25°C/min, under nitrogen

Shown in Table 2 are the results of a study for a 50/50 blend of Upjohn 2080 polyimide and polybenzimidazole. The first scan, taken after aging at 325°C for 5 mins.shows a single intermediate glass transition, indicating miscibility. Upon aging, according to the schedule shown,the glass transition increases steadily in value with thermal aging, indicating the steady progression of crosslinking. A single strong intermediate glass transition is found up to 388°C at an aging temperature of 425°C. After an additional aging at 450°C the magnitude of the transition becomes small in magnitude, indicating a high level of crosslinking. No evidence of phase separation is observed.

Table 2

| Sample | Aging Conditions | Tg Midpoint (°C) Intermediate |
|---|---|---|
| 50/50 Blend | 325°C, 5 min | 346 |
| PBI/2080* | 350°C, 5 min. | 357 |
| | 375°C, 5 min. | 366 |
| | 400°C, 5 min. | 384 |
| | 425°C, 5 min. | 388 |
| | 450°C, 5 min. | 405 ** |

* Prepared 1% of each polymer in N,N-Dimethylacetamide and precipitated in methanol.

** Indicating a very small $T_g$ transition

DSC conditions: 25°C/min. under nitrogen.

## EXAMPLE 2

Films of blends of PBI with XU-218 aromatic polyimide were prepared with 10,25 and 50% XU-218, by casting from solutions in N,N-diemthylacetamide. The films were cast by hand, washed and dried. The DSC scans shown in Figure 1 approximately follow the rule of mixtures indicating blend miscibility. Films were also prepared from blends which contained 10 to 90% XU-218. These were clear and flexible. Thus, aromatic polybenzimidazole and XU-218 aromatic polyimide appear to be miscible in all proportions.

The mechanical properties data shown in Figure 2 also display rule of mixtures behaviour for the blends, which again indicates blend miscibility. (Mpa = MegaPascal, GPa = GigaPascal, and ksi = thousand pounds/square inch.) The 50/50 blend film was unaffected by methylene chloride even after immersion for several weeks.

## EXAMPLE 3

The dynamic mechanical properties of a film comprised of a blend of PBI and XU-218 aromatic polyimide in 50/50 proportions were assessed using a Polymer Laboratories Dynamic Mechanical Thermal Analyzer (DMTA) equipped with a 500° C testing chamber. The scans were made at 1 Hz with a heating rate of 4°C/min under nitrogen. Shown in Figure 3 are the tan spectra for XU-218 aromatic polyimide and PBI along with the 50/50 blend that had been heated to 350° cooled and then scanned. The unimodal tan spectrum observed for the blend is characteristic of a miscible blend. Generally, the temperature at the peak of the tan curve corresponds to that of the glass transition determined by DSC, as it does in this particular case. Figure 4 shows the tan spectra of films that were first thermally aged by heating in the DMTA at 4°C/min to 380°, 400° and 450° C and then cooled to 50°C. The peak tan values decrease and the temperature at the peak increases with higher aging temperatures, indicating progressive crosslinking. A shoulder can be seen developing in the peak in each spectra in the temperature range of 300 to 350°C, indicating progressive phase separation.

## EXAMPLE 4

Three different grades of Ultem® (1000,D5000 and 6000) were obtained from General Electric and blended in different compositions as described below. Ultem® 1000 is an amorphous homopolymer, whereas Ultem®

D5000 and Ultem® 6000 are both copolymers. Elemental analysis of the Ultem® samples is shown in Table 3.

Table 3

Elemental Analysis

| Element | Theoretical(a) | "As Received" | | | Reprecipitated (b) | | |
|---|---|---|---|---|---|---|---|
| | | Ultem® 1000 | Ultem® D5000 | Ultem® 6000 | Ultem® 1000 | Ultem® D5000 | Ultem® 6000 |
| C | 75.0 | 74.99 | 74.94 | 74.11 | 74.78 | 74.51 | 73.83 |
| H | 4.1 | 4.07 | 4.09 | 3.91 | 3.96 | 4.29 | 3.73 |
| N | 4.7 | 4.77 | 4.72 | 5.24 | 4.74 | 4.79 | 5.19 |
| O(c) | 16.2 | 16.17 | 16.25 | 16.74 | 16.52 | 16.41 | 17.25 |
| S | | | | | 0.05 | 0.05 | 0.05 |

(a) For Ultem® 1000. |Product Guide to Ultem® and Material Safety Data, General Electric (1983)|.

(b) Dissolved in methylene chloride (1000 or 6000) or chloroform (5000) and reprecipitated with methanol

(c) Subtract weight percent of C,H,N from 100%

Differential Scanning Calorimetry experiments were conducted in a Perkin-Elmer DSC7 microcalorimeter controlled by a Perkin-Elmer 7500 PC. The samples were continuously flushed with nitrogen. Glass transition temperatures were measured with a heating rate of 10°C/min. The glass transition temperatures, as shown in Table 4, are 217°,223° and 233°C for Ultem® 1000, D5000 and 6000, respectively. The "as received" polymers have a higher glass transition temperature than the reprecipitated ones.

Table 4

Glass Transition Temperatures of Ultem® Resins by Differential Scanning Calorimetry at 10°/min.

| Sample | "As Received" (a) Onset (°C) | Tg(°C) | Reppt. (b) Onset | Tg | Reference (c) |
|---|---|---|---|---|---|
| Ultem® 1000 | 217 | 221 | 212 | 217 | 217 |
| Ultem® D5000 | 221 | 225 | 217 | 222 | 223 |
| Ultem® 6000 | 232 | 237 | 229 | 233 | --- |

(a) Pellet form

(b) Dissolved in methylene chloride (1000 & 6000) or chloroform (5000) adn reprecipitated with methanol

(c) Product Guide to Ultem® and Material Safety Data, General Electric (1983)

Weight loss curves were obtained on a Perkin-Elmer TGS2 Thermobalance while heating at a rate of 10°C/min. under nitrogen. Results are shown in Table 5. The thermal stabilities of the Ultem® samples are equivalent to each other, and their stabilities relative to aromatic polybenzimidazole are shown in Figure 5.

Table 5

Thermal Gravimetric Analysis In $N_2$, 10°C/min

| Sample % Wt. Loss @ Temp.(°C) | Ultem® 1000 | Ultem® D5000 | Ultem® 6000 |
|---|---|---|---|
| Onset | 527 | 525 | 525 |
| 5% | 530 | 528 | 530 |
| 10% | 542 | 540 | 540 |
| 15% | 550 | 548 | 550 |
| 20% | 558 | 556 | 558 |

The aromatic polyetherimides are only soluble in a few selected solvents. Both the Ultem® 1000 and 6000 dissolved readily in methylene chloride, chloroform and N,N-dimethylformamide (heating was required for Ultem® 6000 in order to obtain a clear solution). The D5000, ostensibly solvent resistant, was soluble in hot chloroform.

Blends

Ultem® 1000 was blended with the Celanese aromatic polybenzimidazole at different weight compositions. The blends of aromatic polybenzimidazoles and aromatic polyetherimides were prepared by first dissolving the aromatic polybenzimidazole and aromatic polyetherimide in N,N-dimethylformamide so that each polymer was present in the resulting solution at the desired concentrations, e.g., 1% each on a weight/volume basis, and then adding the solution to methanol to precipitate a novel composition of this invention in the desired concentration. These compositions were then washed with additional methanol and dried under mild thermal conditions, e.g., 50°C or less.

Table 6

Miscibility Studies

| Wt.Composition PEI/PBI | Tg(°C) Lower | Intermediate | Upper | Solvent/Non-Solvent | Comments |
|---|---|---|---|---|---|
| 95/5 | | 218 | | DMF/MeOH | |
| 90/10 | | 225 | | | 1st scan, quench |
| 90/10 | 217 | | Not observed | DMF/MeOH | 2nd scan |
| 50/50 | | 343 | | | 1st scan, quench |
| 50/50 | 208-212 | | 427 | DMF/MeOH | 2nd scan |

Table 6 shows glass transition data for various blends of Ultem® 1000 and Celanese polybenzimidazole which had been subjected to two DSC scans. The first scan was conducted on a freshly prepared sample from room temperature to about 450°C. As can be seen, a single intermediate glass transition was observed for each sample during the first scan, indicating blend miscibility. Two of the samples were cooled to 50°C. and a second scan was run. In the case of the 50/50 blend, two glass transitions, corresponding respectively to the Ultem® 1000 and polybenzimidazole components, were observed, indicating that phase separation had occurred upon heating the blend above its glass transition. In the case of the 90/10 blend, a single glass transition corresponding to Ultem® 1000 was observed. The glass transition for PBI could not be observed probably because so little of it was present and its mass was overwhelmed by that of the Ultem® 1000.

Single DSC scans were run on compositions ranging from about 5% to 95% Ultem® 1000, using the sample preparation methods described in the preceding paragraph. The single glass transition values obtained during this single scan were used to construct Figure 6.

Table 7 presents DSC data for 50/50 blends of Ultem® D5000 and Ultem® 6000 with polybenzimidazole. The experiments were conducted under the same conditions used to compile the data in Table 6. In each case, a single intermediate glass transition was obtained during the first scan and two glass transitions were obtained during the second scan, one close to the values for each component polymers. Thus, Ultem® D5000 and Ultem® 6000 display similar behaviour to Ultem® 1000 in blends with polybenzimidazole.

Table 7

Miscibility Studies of 50/50 Blends

| 50/50 Blends* | | Tg (°C.) Low | Intermediate | High |
|---|---|---|---|---|
| PBI/D5000 | 1st Scan | | 341 | |
| Tg.=222°C | 2nd Scan | 214 | | 414 |
| PBI/6000 | 1st Scan | | 339 | |
| Tg.=233°C. | 2nd Scan | 225 | | 419 |

* Of Celanese polybenzimidazole and the Ultem® polyetherimides indicated dissolved in N,N-diemthylacetamide, precipitated in methanol, thermally aged at 280°C for 5 min.

DSC Conditions: 25°/min under nitrogen

**Example 5**

Blends were prepared by mixing 25% solids PBI dope containing 2% LiCL in N,N-dimethylacetamide and 25% solids Ultem® solution in N,N-dimethylacetamide at ratios of 75:25, 50:50 and 25:75. All solutions were clear with colors dominated by the brown PBI. Films were cast from these dopes on glass plates using a doctor blade to produce a wet film 0.2mm thick. The plate with wet film was then placed in a vacuum oven at 90° to 100°C in order to remove the bulk of the N, N-dimethylacetamide. After 0.5 hr. or so, the plates were removed and after cooling, were immersed in water to strip the films from the plates. Films were then washed in flowing water for at least 2 hr. to remove the remainder of the N,N-dimethylacetamide prior to air drying. With the 50:50 blend dope, it was impossible to draw down a film and set it into the oven before the humidity of the room caused a slight haze of precipitation on the surface. The 25% PBI-75% Ultem® blend also did not look crisp and clear. This observation shows that these compositions should be cast in a dry box in order to obtain clear films.

Strips of film 6mm wide were tested in tension to determine their level of physical properties. Since determination of cross sectional area of thin films is difficult, strengths were measured in units of g/denier and were then converted into engineering units by multiplying by (12800) x (specific gravity). (Mpa = MegaPascal, GPa - GigaPascal, and ksi = thousand pounds/- square inch). The results shown in Figure 8 were as expected; the Ultem® was slightly less strong than the PBI, and the properties of the blends fell in between with a straight line relationship. This behaviour is strongly indicative of a miscible blend.

**EXAMPLE 6**

Films comprised of polybenzimidazole and Ultem 1000 were cast from N,N-dimethylacetamide solution onto glass. They were dried at 100°C for six hours in a dry nitrogen atmosphere. They were then washed in very hot water for 16 hours to remove the remaining N,N-dimethylacetamide. The films, ranging in composition from 10 to 40% polybenzimidazole were clear and flexible. Films of 100% polybenzimidazole and 100% Ultem were similarly prepared for reference purposes.

Strips of the films, with the compositions listed in Table 8, were immersed in methylene chloride and chloroform. Ultem® 1000 dissolved rapidly in each solvent, whereas polybenzimidazole was virtually unaffected. Shown in Table 8 are the % weight loss and the % of solvent absorbed for the films during the immersion time given. Each set of data represents an individual fresh film sample – not multiple immersions. In methylene chloride, substantially reduced amounts of the film were extracted by the solvent as the polybenzimidazole content increased from 20 to 30%. Equilibrium weight loss was achieved after about 18 hours for 20% polybenzimidazole and in less than 3 hours for 30% polybenzimidazole. In chloroform,substantially reduced amounts of the film were extracted by the solvent as the polybenzimidazole content increased from 30 to 40%. Thus,

addition of the polybenzimidazole greatly enhanced the resistance of Ultem® 1000 to attack by the chlorinated hydrocarbon solvents tested.

Table 8

Solubility Studies of Compositions of

Aromatic Polybenzimidazole/Aromatic Polyetherimide (Ultem® 1000)

| Blend Composition % PBI/Ultem® 1000 | % Mass Lost/ % Solvent Absorbed 25 Hrs. | 4 days |
|---|---|---|
| | Methylene Chloride | |
| 0/100 | 100/- | 100/- |
| 10/90 | 53/16 | 55/31 |
| 20/80 | 26/15 | 28/23 |
| 30/70 | 5/17 | 8/21 |
| 40/60 | 5/20 | 4/21 |
| 100/0 | 0/0 | 0/0 |
| | Chloroform | |
| 0/100 | 100/- | 100/- |
| 10/90 | 63/49 | 69/54 |
| 20/80 | 9/6 | 47/41 |
| 30/70 | 2/5 | 17/23 |
| 40/60 | 1/5 | 2/20 |
| 100/0 | 1/0 | 2/0 |

% Mass Lost in Methylene Chloride

| | 3 Hrs | 6 Hrs | 12 Hrs | 13 Hrs | 25 Hrs |
|---|---|---|---|---|---|
| 20/80 | 13 | 19 | 22 | 25 | 26 |
| 30/70 | 4 | 3 | 4 | 4 | 5 |

Strips of polybenzimidazole -Ultem® 1000 miscible films were also immersed in water at 70°C for 16 to 18 hours. After this immersion period, the surface water was removed by drying the films with paper toweling. The water weight loss was determined by thermal gravimetric analysis in the 50° to 200°C temperature range with a heating rate of 10°C/min under nitrogen. Recorded in Figure 9 are the moisture weight loss data determined for films with the compositions shown in the figure, compared to films comprised of 100% polybenzimidazole and Ultem® 1000. It is apparent that the blended films had a lower moisture regain than that predicted by a rule of mixture linear interpolation. In particular, the addition of only 10% Ultem to polybenzimidazole reduced its moisture regain from 10 to 7%.

## Claims

1. A composition comprising from 1 part by weight to 99 parts by weight of an aromatic polyimide or aromatic polyetherimide and from 99 parts by weight to 1 part by weight of an aromatic polybenzimidazole.

2. A composition as claimed in claim 1 in which the aromatic polyimide contains units of the formula:

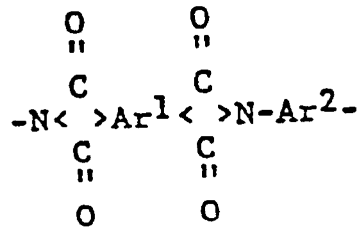

wherein >Ar¹< represents

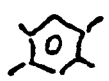 , 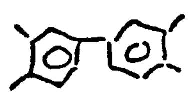 , 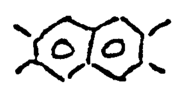 , 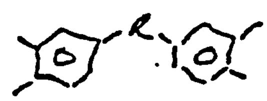

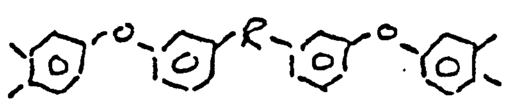 , or 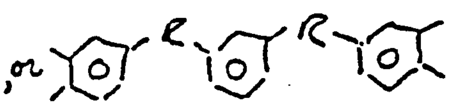

moieties or mixtures thereof;
wherein -Ar²- represents

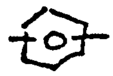 , 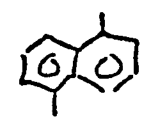 , 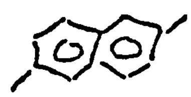 , 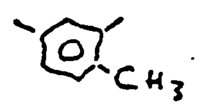 ,

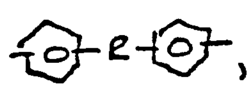 , 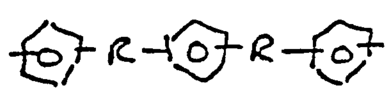 , 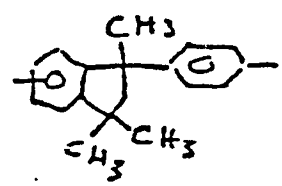 ,

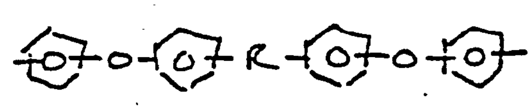 , or 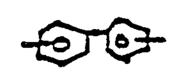

moieties of mixtures thereof, wherein R may be -O-, -S-, $(CH2)_x$, $(CF2)_x$, $[SiOR'_2]_x$, >CHOH , >C=O, $>SO_2$, $>C(CH_3)_2$, $>C(CF_3)_2$, $>C(CF_3)(C_6H_5)$, or mixtures thereof and wherein R' may be $-CH_3$, $-C_6H_5$, $-C_6H_5$, $-C_6H_4-CH_3$ or a mixture thereof, x having a value of from 1 to 6;
and the aromatic polybenzimidazole contains units of the formula:

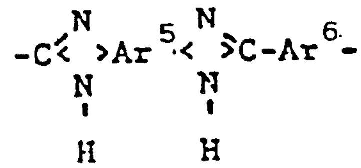

wherein $>Ar^5<$ represents

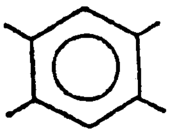,

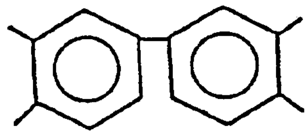 or

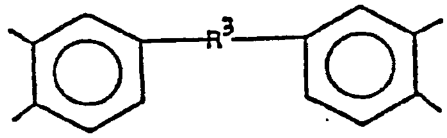

moieties wherein $R^3$ is -O-, -S-, or $-CH_2-$;
$-Ar^6-$ represents

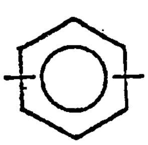,

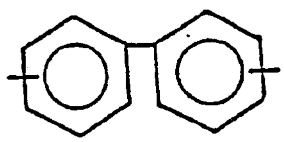,

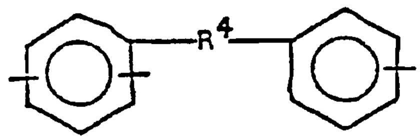,

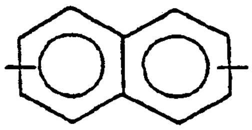 or

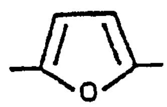

moieties wherein $R^4$ is -O-, $-(CH2)_x$, or $-Si(CH_3)_2-O-Si(CH_3)_2-$ and x is a positive value.

3. A composition as claimed in claim 1 in which the aromatic polyetherimide contains units of the formula:

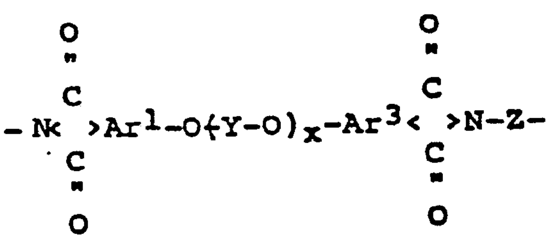

wherein $Ar^1-$ and $Ar^3-$ represent trivalent aromatic moieties or mixtures thereof; wherein Y represents divalent aromatic moieties $-Ar^2-$, or divalent aliphatic moieties $R^1$ containing up to 6 carbon atoms, or mixtures thereof; wherein Z represents aromatic moieties $-Ar^4-$, or divalent aliphatic moieties $R^2$ containing up to 6 carbon atoms, or mixtures thereof; and wherein x has a value of 0 or is a positive integer;
and the aromatic polybenzimidazole is as defined in claim 2.

4. A composition as claimed in claim 1 which comprises from 5 parts by weight to 95 parts by weight of an aromatic polyimide or aromatic polyetherimide and from 95 parts by weight to 5 parts by weight of an aromatic polybenzimidazole.

5. A composition as claimed in claim 1 wherein the aromatic polyimide is a thermoplastic aromatic polyimide.

6. A composition as claimed in claim 1 wherein the aromatic polyimide is a soluble thermoplastic aromatic polyimide.

7. A composition as claimed in claim 1 which comprises from 65 parts by weight to 95 parts by weight of an aromatic polybenzimidazole and from 35 parts by weight to 5 parts by weight of a thermoplastic aromatic polyimide or aromatic polyetherimide.

8. A composition as claimed in claim 1 which comprises at least 10 parts by weight of a thermoplastic aromatic polyimide or aromatic polyetherimide.

9. A composition as claimed in claim 1 which comprises from 65 parts by weight to 95 parts by weight of a soluble thermoplastic aromatic polyimide or aromatic polyetherimide and from 35 parts by weight to 5 parts by weight of an aromatic polybenzimidazole.

10. A composition as claimed in claim 1 which comprises at least 25 parts by weight of an aromatic polybenzimidazole.

11. A composition as claimed in claim 1 in which the aromatic polyimide is

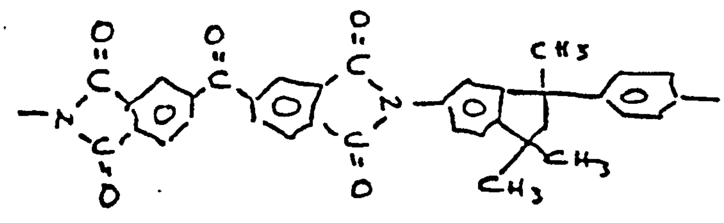

or

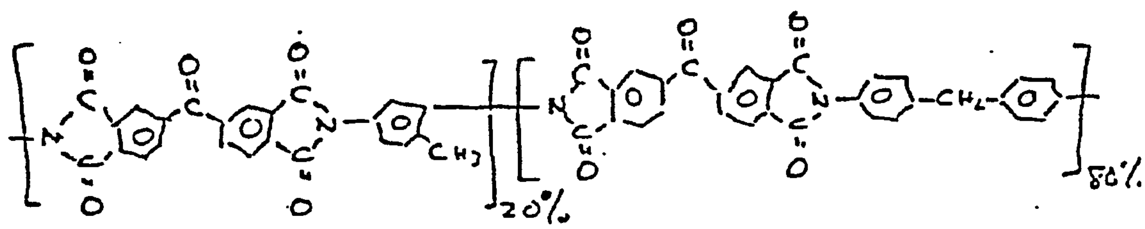

12. A composition as claimed in claim 1 in which the aromatic polyetherimide contains units of the formula:

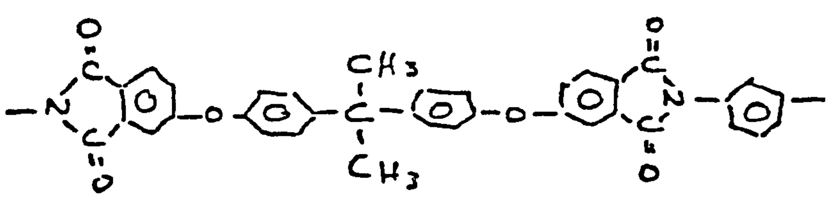

13. A composition as claimed in claim 1 in which the aromatic polybenzimidazole is poly-2,2'-(m-phenylene)-5,5'-bibenzimidazole.

14. A composition as clamed in claim 1 which is phase separated.

15. A composition as claimed in claim 1 which is phase separated and comprises from 5 parts by weight to 95 parts by weight of an aromatic polyimide or aromatic polyetherimide and from 95 parts by weight to 5 parts by weight of an aromatic polybenzimidazole.

16. A composition as claimed in claim 1 which is phase separated and comprises at least 25 parts by weight of an aromatic polybenzimidazole.

17. A composition as claimed in claim 1 which is phase separated and comprises at least 10 parts by weight of an aromatic polyimide or aromatic polyetherimide.

18. A film prepared from a composition as claimed in any of claims 1 to 17.

19. A film as claimed in claim 18, which film has been heat-treated above its glass transition temperature to cause it to phase separate and then quickly quench-cooled to freeze its phase-separated morphology.

20. A process for preparing miscible compositions as claimed in any of claims 1 to 17 which comprises dissolving the aromatic polybenzimidazole and the soluble thermoplastic aromatic polyimide or aromatic polyetherimide in a mutual solvent in the required relative weight proportions, and then adding the resulting solution to a non-solvent for the composition to precipitate the required composition and subsequently drying the composition.

21. A process as claimed in claim 20 in which the mutual solvent is N,N-dimethylformamide, N,N-dimethylacetamide or N-methylpyrrolidone.

22. A process as claimed in claim 20 or 21 in which the non-solvent is methanol.

23. A process as claimed in any of claims 20 to 22, in which, based on 100 total parts by weight of the two polymers, there is present at least 25 parts by weight of an aromatic polybenzimidazole.

24. A process as claimed in any of claims 20 to 23 in which, based on 100 total parts by weight of the two polymers, there is present at least 10 parts by weight of a thermoplastic aromatic polyimide or aromatic polyetherimide.

25. A process as claimed in any of claims 20 to 24 in which the aromatic polybenzimidazole and the soluble thermoplastic aromatic polyimide or aromatic polyetherimide are present in the resulting solution in a concentration of from 1% to 30% on a weight/volume basis.

26. A process as claimed in claim 25 in which the aromatic polybenzimidazole and the soluble thermoplastic aromatic polyimide or aromatic polyetherimide are present in the resulting solution in a concentration of from 1% to 15% each on a weight/volume basis.

27. A process as claimed in any of claims 20 to 26 in which the dried composition is heated above its binodal or spinodal phase boundary temperature or glass transition temperature to cause it to phase separate, and then it is quench-cooled to freeze the phase separated morphology.

28. A process for preparing miscible compositions which comprises dissolving an aromatic polybenzimidazole and an aromatic polyimide in its precursor polyamic acid form in a mutual solvent in relative weight proportions to each other of from 1 to 99 of the aromatic polybenzimidazole to 99 to 1 of the polyamic acid, casting a film, removing the solvent, and then cyclizing to form the polyimide.

29. A process for preparing a film as claimed in claim 18 or 19 which comprises dissolving the aromatic polybenzimidazole and the aromatic polyetherimide in a mutual solvent in the required relative weight proportions, and then casting a film from the solution under substantially moisture-free conditions, washing the film with a non-solvent, and drying the resulting film at a temperature below the glass transition temperature of the composition.

30. A process as claimed in claim 29 in which the mutual solvent is N,N-dimethylformamide,N,N-dimethylacetamide or N-methylpyrrolidone.

31. A process as claimed in claim 29 or 30 in which the non-solvent is methanol.

32. A process as claimed in any of claims 29 to 31 in which the film is heated above its glass transition temperature to cause it to phase separate and then quickly quench-cooled to freeze the phase-separated morphology.

**Patentansprüche**

1. Zusammensetzung, umfassend 1 Gewichtsteil bis 99 Gewichtsteile eines aromatischen Polyimids oder aromatischen Polyetherimids und 99 Gewichtsteile bis 1 Gewichtsteil eines aromatischen Polybenzimidazols.

2. Zusammensetzung nach Anspruch 1, worin das aromatische Polyimid Einheiten der Formel

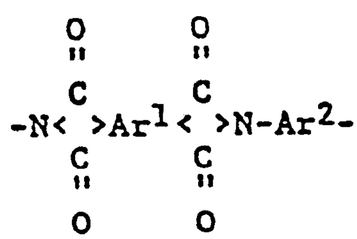

enthält, worin >Ar¹< für

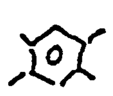 , 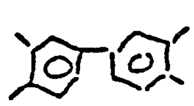 , 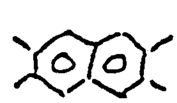 , 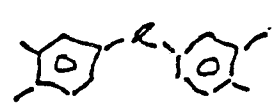

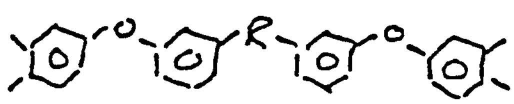 oder 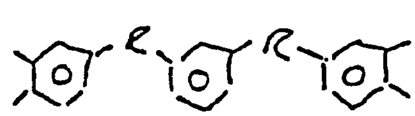

Einheiten oder deren Mischungen steht;
worin -$Ar^2$- für

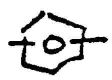, 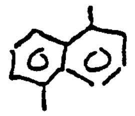, 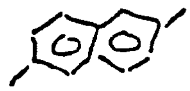, 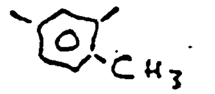,

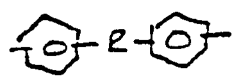, 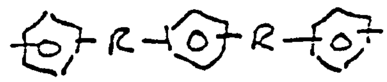, 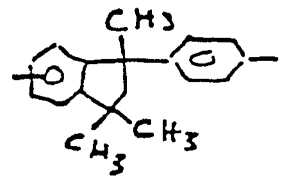,

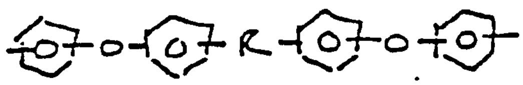 oder 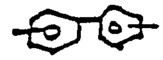

Einheiten oder deren Mischungen steht, worin R -O-, -S-, $-(CH_2)_x-$, $-(CF_2)_x-$, $-(SiOR'_2)_x-$, >CHOH, >C=O, $>SO_2$, $>C(CH_3)_2$, $>C(CF_3)_2$, $>C(CF_3)(C_6H_5)$ oder eine Mischung daraus sein kann, worin R′ $-CH_3$, $-C_6H_5$, $-C_6H_4-CH_3$ oder eine Mischung daraus sein kann und x einen Wert von 1 bis 6 hat;
und das aromatische Polybenzimidazol Einheiten der Formel

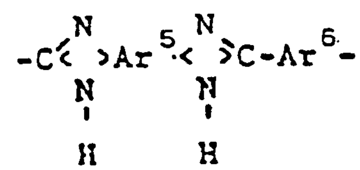

enthält, worin $>Ar^5<$

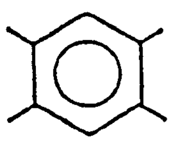, 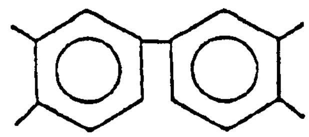 oder 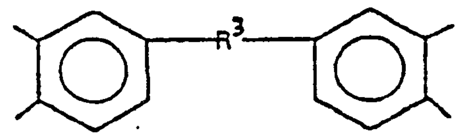

Einheiten bedeutet, worin $R^3$ -O-, -S- oder $-CH_2-$ bedeutet;
-$Ar^6$- für

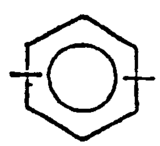, 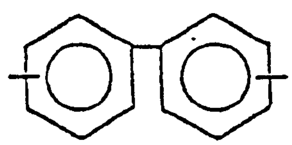, 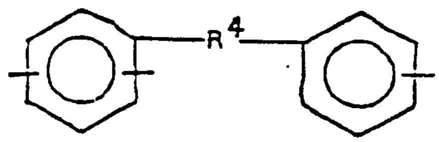

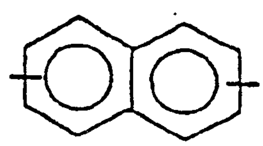 oder 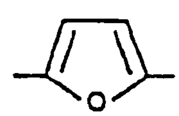

Einheiten steht, worin $R^4$ -O-, $-(CH_2)_x-$ oder $-Si(CH_3)_2-O-Si(CH_3)_2-$ ist, und x ein positiver Wert ist.

3. Zusammensetzung nach Anspruch 1, worin das aromatische Polyetherimid Einheiten der Formel

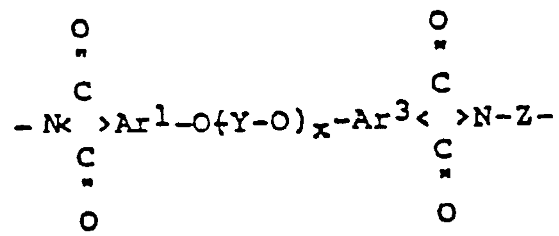

enthält, worin $Ar^1$ und $Ar^3$ trivalente aromatische Reste oder Mischungen daraus bedeuten; worin Y für divalente aromatische Reste $-Ar^2-$ oder divalente aliphatische Reste $R^1$ mit bis zu 6 Kohlenstoff-Atomen oder Mischungen daraus steht; worin Z für aromatische Reste $-Ar^4-$ oder divalente aliphatische Reste $R^2$ mit bis zu 6 Kohlenstoff-Atomen oder Mischungen daraus steht; und worin x den Wert 0 hat oder eine positive ganze Zahl ist; und das aromatische Polybenzimidazol wie in Anspruch 2 definiert ist.

4. Zusammensetzung nach Anspruch 1, umfassend 5 Gewichtsteile bis 95 Gewichtsteile eines aromatischen Polyimids oder aromatischen Polyetherimids und 95 Gewichtsteile bis 5 Gewichtsteile eines aromatischen Polybenzimidazols.

5. Zusammensetzung nach Anspruch 1, worin das aromatische Polyimid ein thermoplastisches aromatisches Polyimid ist.

6. Zusammensetzung nach Anspruch 1, worin das aromatische Polyimid ein lösliches thermoplastisches aromatisches Polyimid ist.

7. Zusammensetzung nach Anspruch 1, umfassend 65 Gewichtsteile bis 95 Gewichtsteile eines aromatischen Polybenzimidazols und 35 Gewichtsteile bis 5 Gewichtsteile eines thermoplastischen aromatischen Polyimids oder aromatischen Polyetherimids.

8. Zusammensetzung nach Anspruch 1, umfassend wenigstens 10 Gewichtsteile eines thermoplastischen aromatischen Polyimids oder aromatischen Polyetherimids.

9. Zusammensetzung nach Anspruch 1, umfassend 65 Gewichtsteile bis 95 Gewichtsteile eines löslichen thermoplastischen aromatischen Polyimids oder aromatischen Polyetherimids und 35 Gewichtsteile bis 5 Gewichtsteile eines aromatischen Polybenzimidazols.

10. Zusammensetzung nach Anspruch 1, umfassend wenigstens 25 Gewichtsteile eines aromatischen Polybenzimidazols.

11. Zusammensetzung nach Anspruch 1, worin das aromatische Polyimid

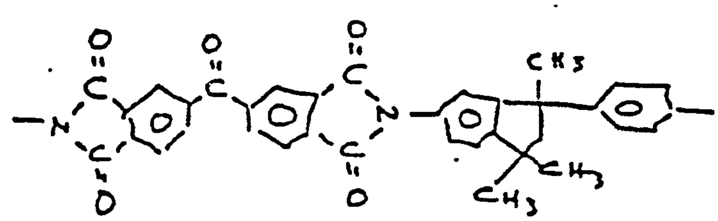

ist oder

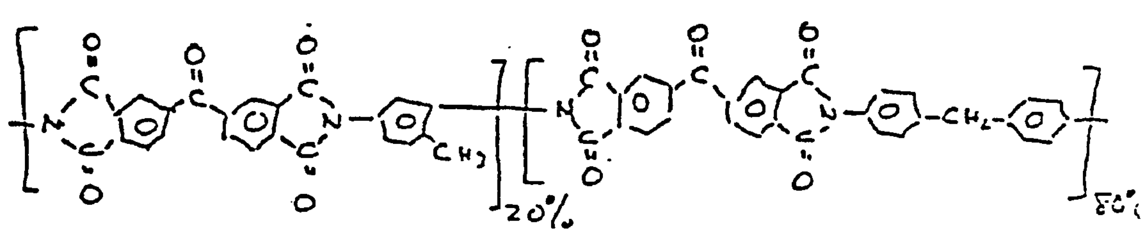

12. Zusammensetzung nach Anspruch 1, worin das aromatische Polyetherimid Einheiten der Formel

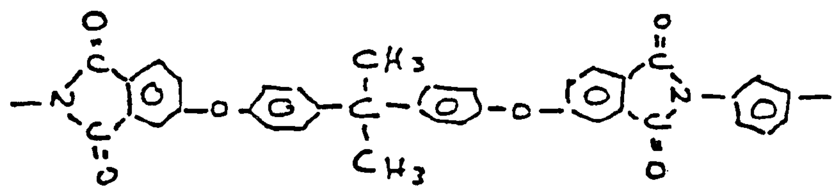

enthält.

13. Zusammensetzung nach Anspruch 1, worin das aromatische Polybenzimidazol Poly-2,2'-(m-phenylen)-5,5'-dibenzimidazol ist.

14. Zusammensetzung nach Anspruch 1, welche phasengetrennt ist.

15. Zusammensetzung nach Anspruch 1, welche phasengetrennt ist und 5 Gewichtsteile bis 95 Gewichtsteile eines aromatischen Polyimids oder aromatischen Polyetherimids und 95 Gewichtsteile bis 5 Gewichtsteile eines aromatischen Polybenzimidazols umfaßt.

16. Zusammensetzung nach Anspruch 1, welche phasengetrennt ist und wenigstens 25 Gewichtsteile eines aromatischen Polybenzimidazols umfaßt.

17. Zusammensetzung nach Anspruch 1, welche phasengetrennt ist und wenigstens 10 Gewichtsteile eines aromatischen Polyimids oder aromatischen Polyetherimids umfaßt.

18. Film, hergestellt aus einer Zusammensetzung nach irgendeinem der Ansprüche 1 bis 17.

19. Film nach Anspruch 18, welcher über seine Glasübergangstemperatur hinaus wärmebehandelt wurde, um seine Phasentrennung zu bewirken, und dann schnell abgeschreckt wurde, um seine phasengetrennte Morphologie einzufrieren.

20. Verfahren zur Herstellung mischbarer Zusammensetzungen nach irgendeinem der Ansprüche 1 bis 17, umfassend das Lösen des aromatischen Polybenzimidazols und des löslichen thermoplastischen aromatischen Polyimids oder aromatischen Polyetherimids in den benötigten relativen Gewichtsanteilen in einem gemeinsamen Lösungsmittel, dann das Zugeben der gebildeten Lösung zu einem die Zusammensetzung nichtlösenden Lösungsmittel, um die gewünschte Zusammensetzung auszufällen, und das anschliessende Trocknen der Zusammensetzung.

21. Verfahren nach Anspruch 20, wobei das gemeinsame Lösungsmittel N,N-Dimethylformamid, N,N-Dimethylacetamid oder N-Methylpyrrolidon ist.

22. Verfahren nach Anspruch 20 oder 21, wobei das nicht-lösende Lösungsmittel Methanol ist.

23. Verfahren nach irgendeinem der Ansprüche 20 bis 22, wobei wenigstens 25 Gewichtsteile eines aromatischen Polybenzimidazols vorhanden sind, bezogen auf 100 Gesamtgewichtsteile der beiden Polymere.

24. Verfahren nach irgendeinem der Ansprüche 20 bis 23, wobei wenigstens 10 Gewichtsteile eines thermoplastischen aromatischen Polyimids oder aromatischen Polyetherimids vorhanden sind, bezogen auf 100 Gesamtgewichtsteile der beiden Polymere.

25. Verfahren nach irgendeinem der Ansprüche 20 bis 24, wobei das aromatische Polybenzimidazol und das lösliche thermoplastische aromatische Polyimid oder aromatische Polyetherimid mit einer Konzentration von 1% bis 30%, bezogen auf Gewicht/Volumen, in der gebildeten Lösung vorhanden sind.

26. Verfahren nach Anspruch 25, wobei das aromatische Polybenzimidazol und das lösliche thermoplastische aromatische Polyimid oder aromatische Polyetherimid mit einer Konzentration von je 1% bis 15%, bezogen auf Gewicht/Volumen, in der gebildeten Lösung vorhanden sind.

27. Verfahren nach irgendeinem der Ansprüche 20 bis 26, wobei die getrocknete Zusammensetzung über ihre binodale oder spinodale Phasengrenztemperatur oder Glasübergangstemperatur erwärmt wurde, um ihre Phasentrennung zu bewirken, und dann abgeschreckt wurde, um ihre phasengetrennte Morphologie einzufrieren.

28. Verfahren zur Herstellung mischbarer Zusammensetzungen, umfassend das Lösen eines aromatischen Polybenzimidazols und eines aromatischen Polyimids in seiner Polyamsäure-Vorläuferform in relativen Gewichtsanteilen zueinander von 1 bis 99 des aromatischen Polybenzimidazols zu 99 bis 1 der Polyamsäure in einem gemeinsamen Lösungsmittel, das Gießen eines Films, Entfernen des Lösungsmittels, und dann Cyclisieren unter Bildung des Polyimids.

29. Verfahren zur Herstellung eines Films nach Anspruch 18 oder 19, umfassend das Lösen des aromatischen Polybenzimidazols und des aromatischen Polyetherimids in den benötigten relativen Gewichtsanteilen in einem gemeinsamen Lösungsmittel, und dann das Gießen eines Films mit der Lösung unter im wesentlichen feuchtigkeitsfreien Bedingungen, Waschen des Films mit einem nicht-lösenden Lösungsmittel und Trocknen des gebildeten Films bei einer Temperatur, die unterhalb der Glasübergangstemperatur der Zusammensetzung liegt.

30. Verfahren nach Anspruch 29, wobei das gemeinsame Lösungsmittel N,N-Dimethylformamid, N,N-Dimethylacetamid oder N-Methylpyrrolidon ist.

31. Verfahren nach Anspruch 29 oder 30, wobei das nicht-lösende Lösungsmittel Methanol ist.

32. Verfahren nach irgendeinem der Ansprüche 29 bis 31, wobei der Film über seine Glasübergangstemperatur erhitzt wurde, um seine Phasentrennung zu bewirken, und dann schnell abgeschreckt wurde, um seine phasengetrennte Morphologie einzufrieren.

## Revendications

1. Composition comprenant 1 partie en poids à 99 parties en poids d'un polyimide aromatique ou polyétherimide aromatique et 99 parties en poids à 1 partie en poids d'un polybenzimidazole aromatique.

2. Composition selon la revendication 1 dans laquelle le polyimide aromatique contient des unités de la formule :

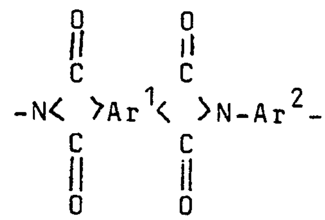

où $>Ar^1<$ représente des fragments

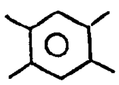 , 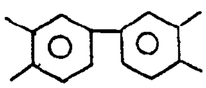 , 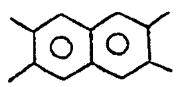 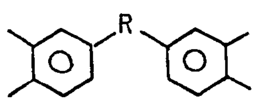

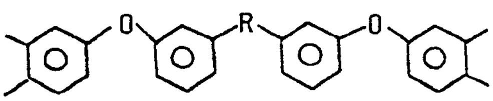 , ou 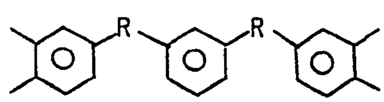

ou leurs mélanges ;
où $-Ar^2-$ représente des fragments

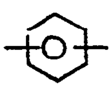 , 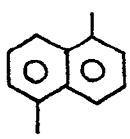 , 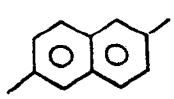 , 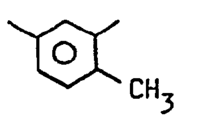 ,

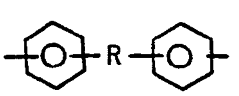 , 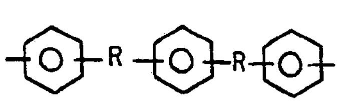 , 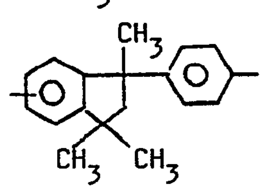

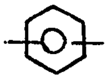 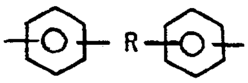 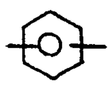 , ou 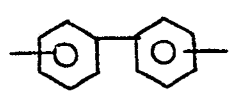

ou leurs mélanges, où R peut être -O-, -S-, $\{CH_2\}_x$, $\{CF_2\}_x$, $[SiOR'_2]_x$, >CHOH, >C=O, $>SO_2$, $>C(CH_3)_2$, $>C(CF_3)_2$, $>C(CF_3)(C_6H_5)$, ou leurs mélanges et où R' peut être $-CH_3$, $-C_6H_5$, $-C_6H_5$, $-C_6H_4-CH_3$ ou un mélange, x ayant une valeur de 1 à 6 ;
et le polybenzimidazole aromatique contient des unités de la formule

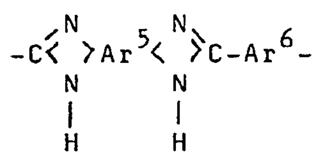

où >$Ar^5$< représente des fragments

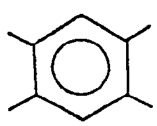

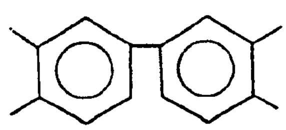

ou

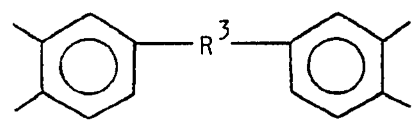

où $R^3$ est -O-, -S- ou $-CH_2-$ ;
$-Ar^6-$ représente des fragments

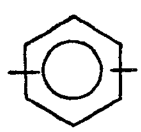

,

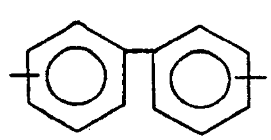

,

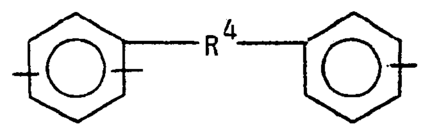

,

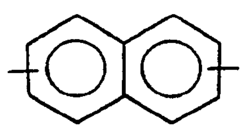

ou

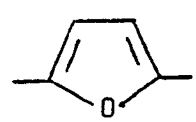

où $R^4$ est -O-, $-(CH_2)_x$, ou $-Si(CH_3)_2-O-Si(CH_3)_2-$ et x est une valeur positive.

3. Composition selon la revendication 1 où le polyétherimide aromatique contient des unités de la formule :

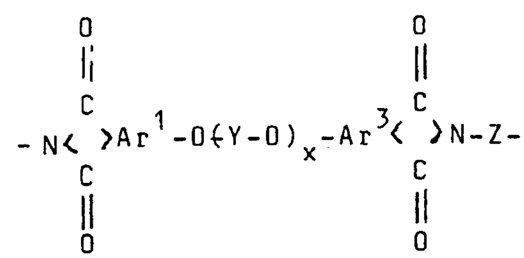

où $Ar^1$- et $Ar^3$- représentent des fragments aromatiques trivalents ou leurs mélanges ; où Y représente des fragments aromatiques divalents $-Ar^2-$ ou des fragments aliphatiques divalents, $R^1$ contenant jusqu'à 6 atomes de carbone, ou leurs mélanges ; où Z représente des fragments aromatiques $-Ar^4-$ ou des fragments aliphatiques différents, $R^2$ contenant jusqu'à 6 atomes de carbone, ou leurs mélanges ; et où x a une valeur de 0 ou est un nombre entier positif ;
et le polybenzimidazole aromatique est tel que défini à la revendication 2.

4. Composition selon la revendication 1 qui comprend 5 parties en poids à 95 parties en poids d'un polyimide aromatique ou polyétherimide aromatique et 95 parties en poids à 5 parties en poids d'un polybenzimidazole aromatique.

5. Composition selon la revendication 1 où le polyimide aromatique est un polyimide aromatique thermoplastique.

6. Composition selon la revendication 1 où le polyimide aromatique est un polyimide aromatique thermoplastique soluble.

7. Composition selon la revendication 1 qui comprend 65 parties en poids à 95 parties en poids d'un polybenzimidazole aromatique et 35 parties en poids à 5 parties en poids d'un polyimide aromatique thermoplastique ou polyétherimide aromatique.

8. Composition selon la revendication 1 qui comprend au moins 10 parties en poids d'un polyimide aromatique thermoplastique ou d'un polyétherimide aromatique.

9. Composition selon la revendication 1 qui comprend 65 parties en poids à 95 parties en poids d'un polyimide aromatique thermoplastique soluble ou polyétherimide aromatique et 35 parties en poids à 5 parties en poids d'un polybenzimidazole aromatique.

10. Composition selon la revendication 1 qui comprend au moins 25 parties en poids d'un polybenzimidazole aromatique.

11. Composition selon la revendication 1 où le polyimide aromatique est

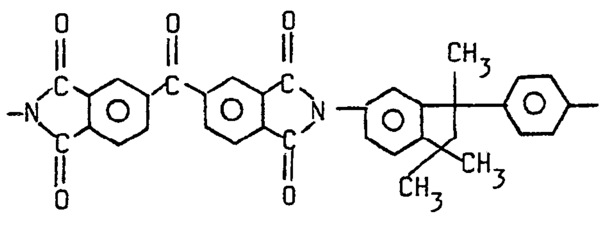

ou

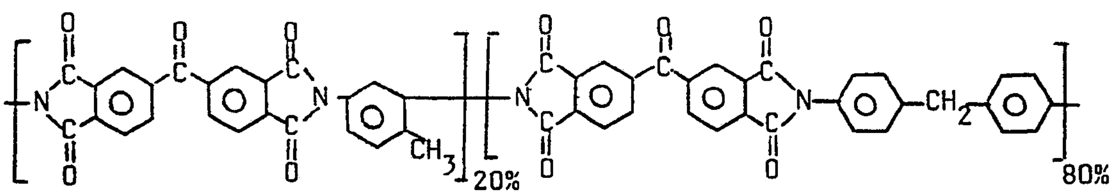

12. Composition selon la revendication 1 où le polyétherimide aromatique contient des unités de la formule :

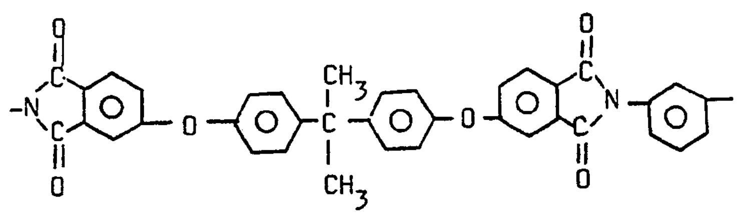

13. Composition selon la revendication 1 où le polybenzimidazole aromatique est le poly-2,2'-(m-phénylène)-5,5'-bibenzimidazole.

14. Composition selon la revendication 1 qui est séparée en phases.

15. Composition selon la revendication 1 qui est séparée en phases et qui comprend 5 parties en poids à 95 parties en poids d'un polyimide aromatique ou d'un polyétherimide aromatique et 95 parties en poids à 5 parties en poids d'un polybenzimidazole aromatiques.

16. Composition selon la revendication 1 qui est séparée en phases et qui comprend au moins 25 parties en poids d'un polybenzimidazole aromatique.

17. Composition selon la revendication 1 qui est séparée en phases et qui comprend au moins 10 parties en poids d'un polyimide aromatique ou d'un polyétherimide aromatique.

18. Film préparé à partir d'une composition selon l'une quelconque des revendications 1 à 17.

19. Film selon la revendication 18, lequel film a été traité thermiquement au-dessus de sa température de transition vitreuse pour forcer ses phases à se séparer puis a été rapidement refroidi pour geler sa morphologie à phases séparées.

20. Procédé de préparation de compositions miscibles selon l'une quelconque des revendications 1 à 17 qui consiste à dissoudre le polybenzimidazole aromatique et le polyimide aromatique thermoplastique soluble ou polyétherimide aromatique dans un solvant mutuel aux proportions pondérales relatives requises puis à ajouter la solution résultante à un non-solvant de la composition pour précipiter la composition requise et subséquemment à sécher la composition.

21. Procédé selon la revendication 20 où le solvant mutuel est le N,N-diméthylformamide, le N,N -diméthylacétamide ou la N-méthylpyrrolidone.

22. Procédé selon la revendication 20 ou 21 où le non-solvant est le méthanol.

23. Procédé selon l'une quelconque des revendications 20 à 22 où, en se basant sur 100 parties au total en poids des deux polymères, il y a au moins 25 parties en poids d'un polybenzimidazole aromatique.

24. Procédé selon l'une quelconque des revendications 1 à 23 où, en se basant sur 100 parties au total en poids des deux polymères, il y a au moins 10 parties en poids d'un polyimide aromatique thermoplastique ou polyétherimide aromatique.

25. Procédé selon l'une quelconque des revendications 20 à 24 où le polybenzimidazole aromatique et le polyimide aromatique thermoplastique soluble ou le polyétherimide aromatique sont présents dans la solution résultante à une concentration de 1% à 30% sur une base poids/volume.

26. Procédé selon la revendication 25 où le polybenzimidazole aromatique et le polyimide aromatique thermoplastique soluble ou polyétherimide aromatique sont présents dans la solution résultante à une concentration de 1% à 15% chacun sur une base poids/volume.

27. Procédé selon l'une quelconque des revendication 20 à 26 où la composition séchée est chauffée au delà de sa température limite de phase binodale ou spinodale ou sa température de transition vitreuse pour provoquer une séparation des phases puis elle est refroidie rapidement pour geler la morphologie des phases séparées.

28. Procédé de préparation de compositions miscibles qui consiste à dissoudre un polybenzimidazole aromatique et un polyimide aromatique sous sa forme d'acide polyamique précurseur dans un solvant mutuel à des proportions pondérales relatives l'une à l'autre de 1 à 99 du polybenzimidazole aromatique à 99 à 1 de l'acide polyamique, à couler un film, à enlever le solvant puis à cycliser pour former le polyimide.

29. Procédé de préparation d'un film selon la revendication 18 ou 19 qui consiste à dissoudre le polybenzimidazole aromatique et le polyétherimide aromatique dans un solvant mutuel, aux proportions pondérales relatives requises, puis à couler un film de la solution en conditions sensiblement sans humidité, à laver le film avec un non-solvant et à sécher le film résultant à une température inférieure à la température de transition vitreuse de la composition.

30. Procédé selon la revendication 29 où le solvant mutuel est le N,N-diméthylformamide, le N,N-diméthylacétamide ou la N-méthylpyrrolidone.

31. Procédé selon la revendication 29 ou 30 où le non-solvant est le méthanol.

32. Procédé selon l'une quelconque des revendications 29 à 31 où le film est chauffé au delà de sa température de transition vitreuse pour provoquer une séparation de ses phases puis est rapidement refroidi pour geler la morphologie des phases séparées.

FIG.1

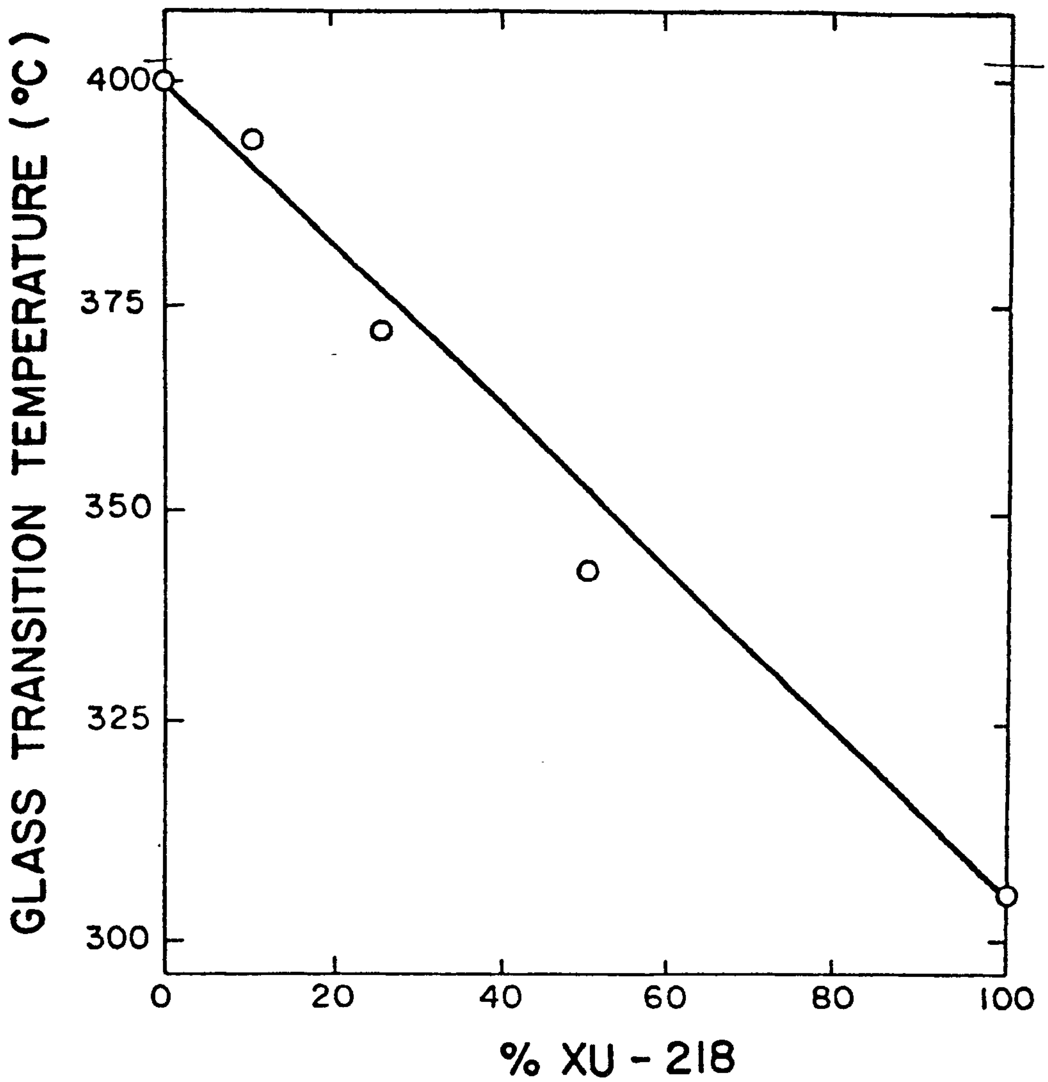
GLASS TRANSITION TEMPERATURE (°C)
400
375
350
325
300
0
20
40
60
80
100
% XU - 218

FIGURE 2

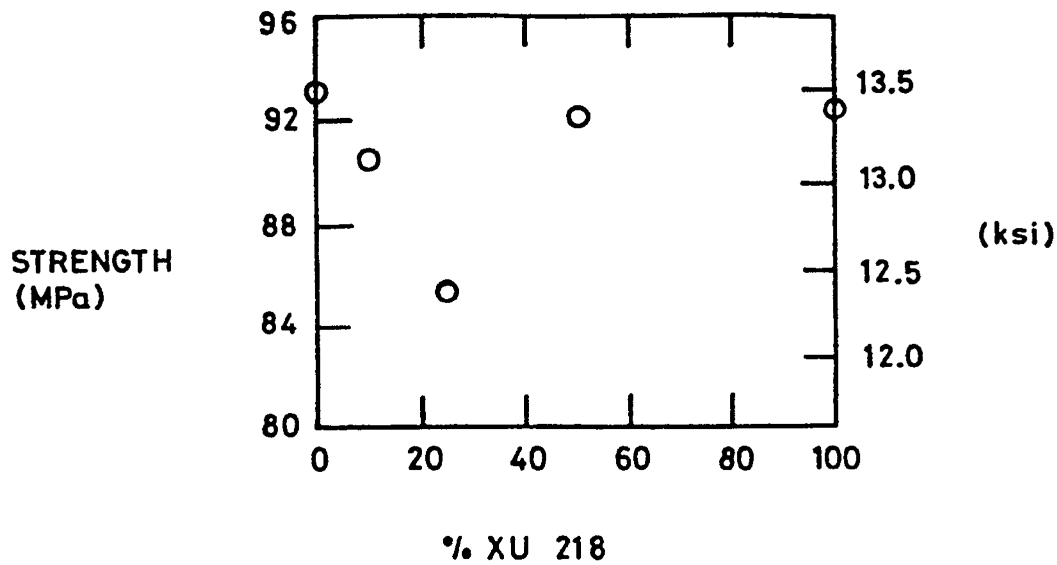


a. Tensile Strength

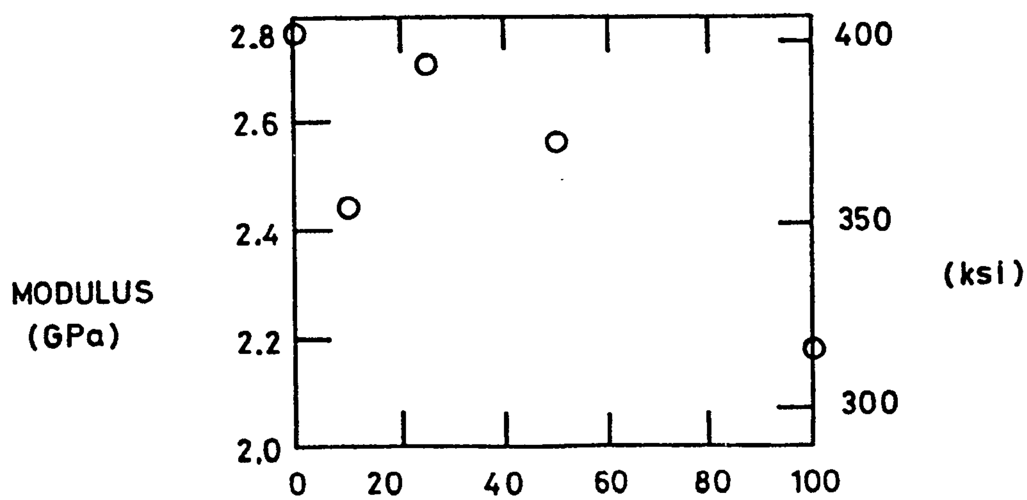


b. Modulus

MECHANICAL PROPERTIES
OF PBI – XU–218 FILMS

FIG.3

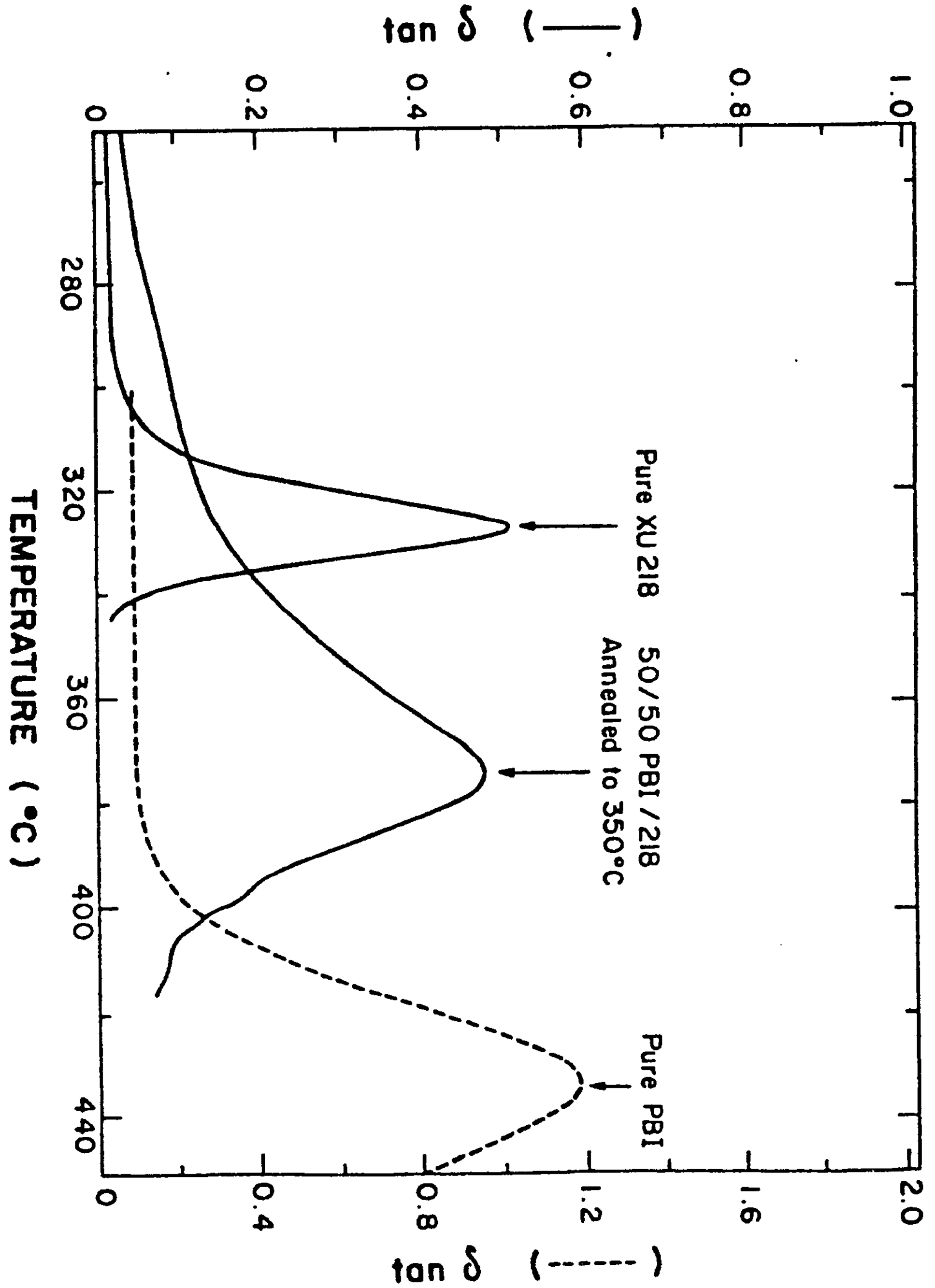
tan δ (——)
0
0.2
0.4
0.6
0.8
1.0
280
320
360
400
440
TEMPERATURE (°C)
Pure XU 218
50/50 PBI / 218
Annealed to 350°C
Pure PBI
0
0.4
0.8
1.2
1.6
2.0
tan δ (------)

FIG.4

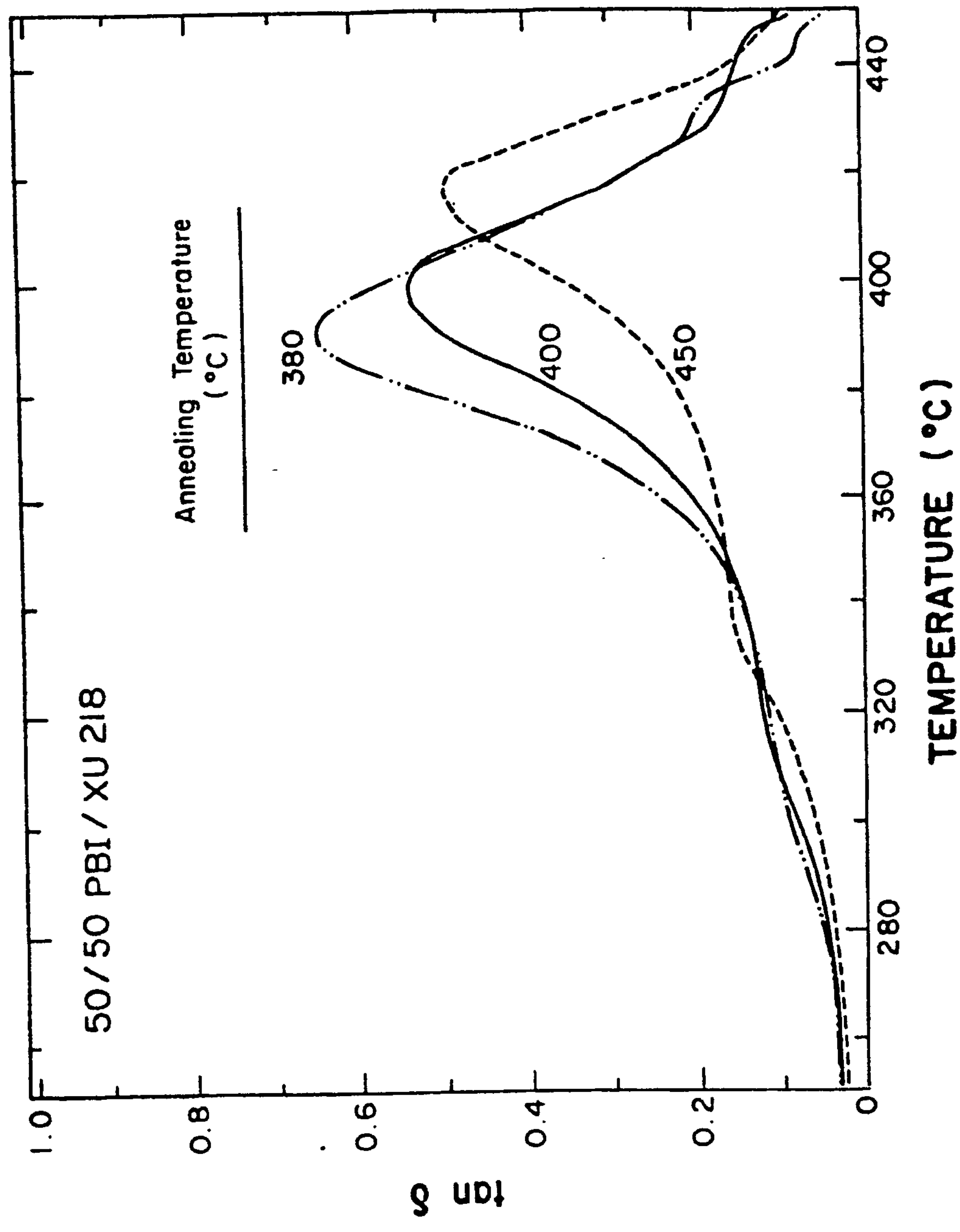
50/50 PBI / XU 218
Annealing Temperature
(°C)
380
400
450
tan δ
1.0
0.8
0.6
0.4
0.2
0
280
320
360
400
440
TEMPERATURE (°C)

FIG.5

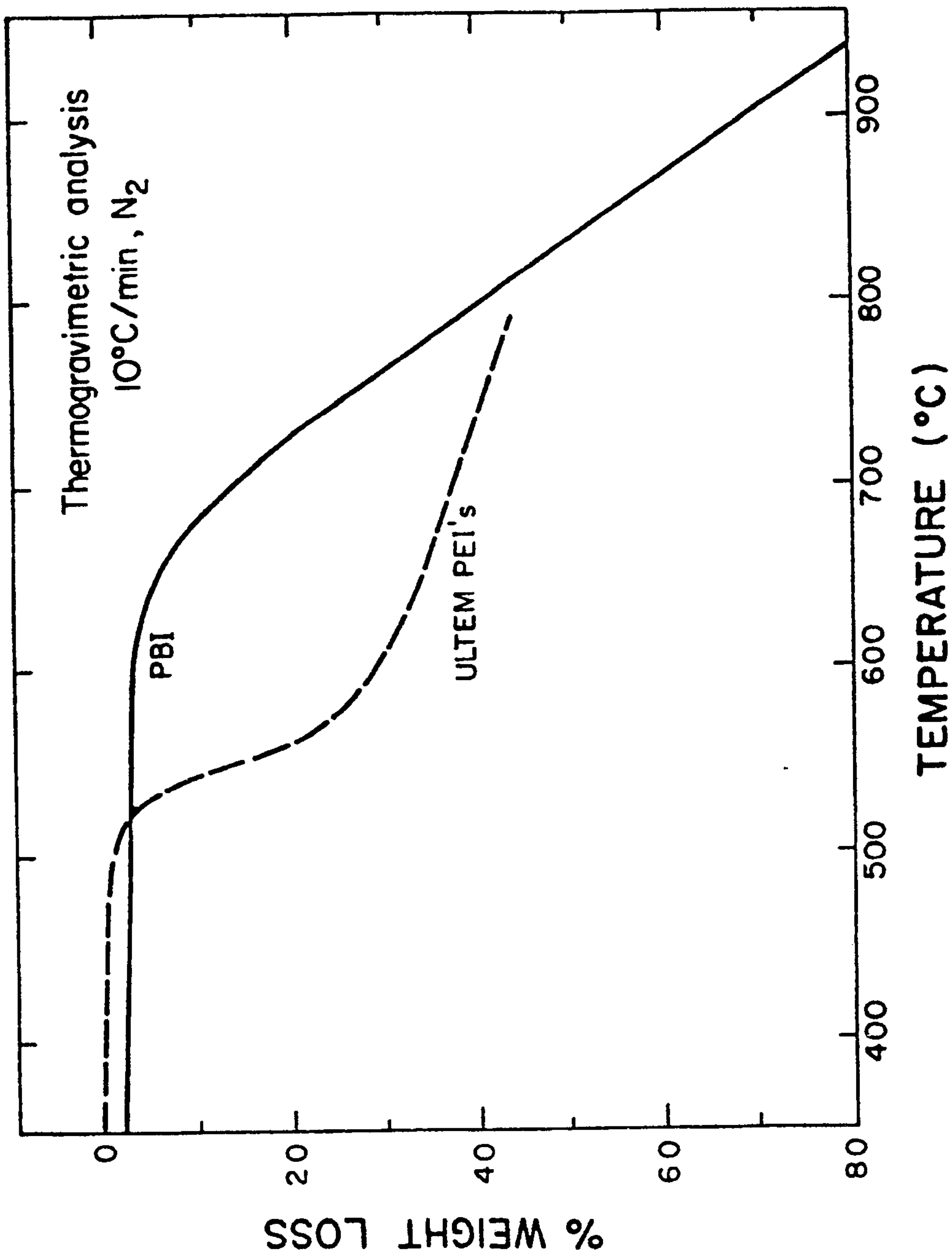
Thermogravimetric analysis
10°C/min, $N_2$
PBI
ULTEM PEI's
TEMPERATURE (°C)
400
500
600
700
800
900
% WEIGHT LOSS
0
20
40
60
80

FIG.6

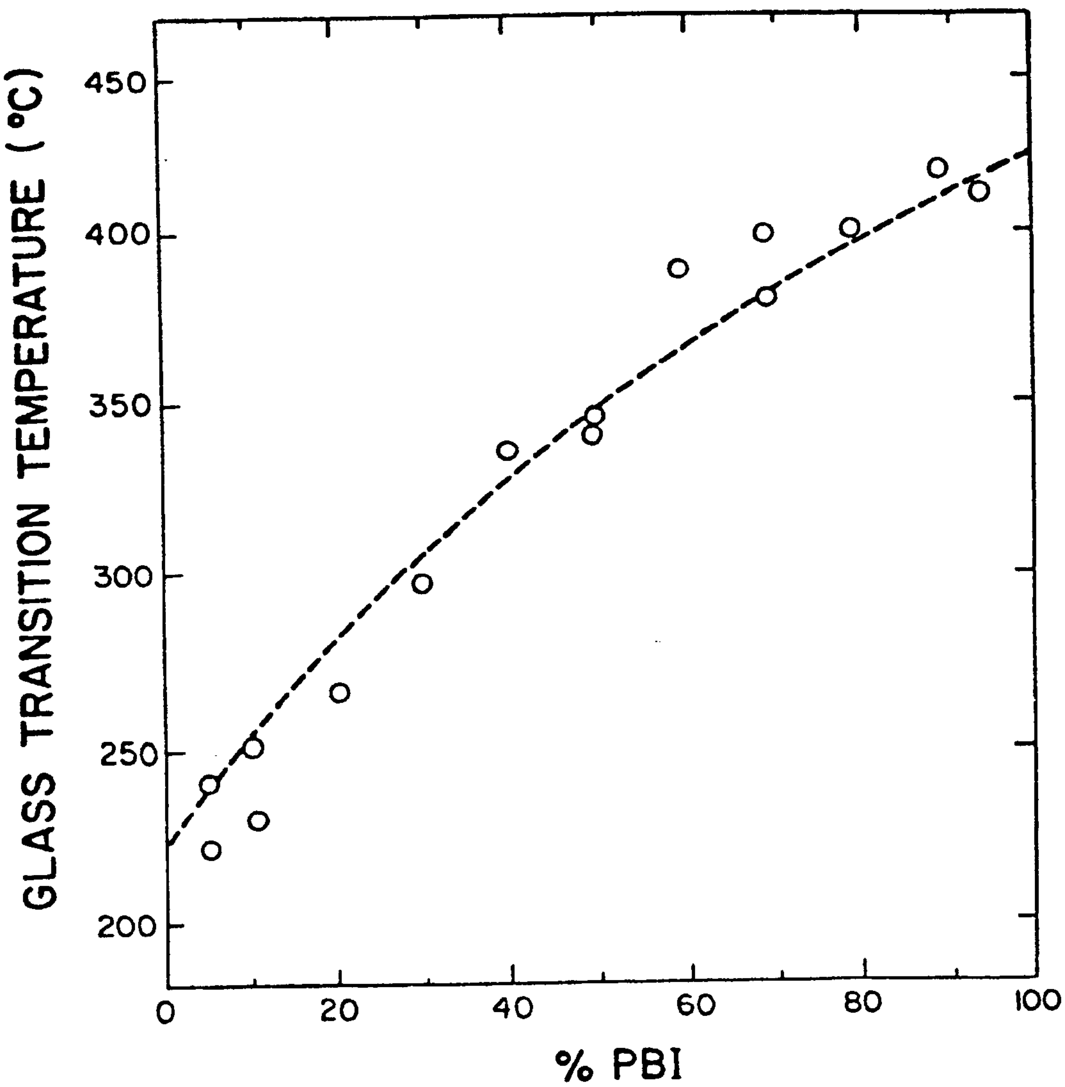
GLASS TRANSITION TEMPERATURE (°C)
450
400
350
300
250
200
0
20
40
60
80
100
% PBI

FIGURE 7

50/50 PBI/PEI (DMF/MeOH)

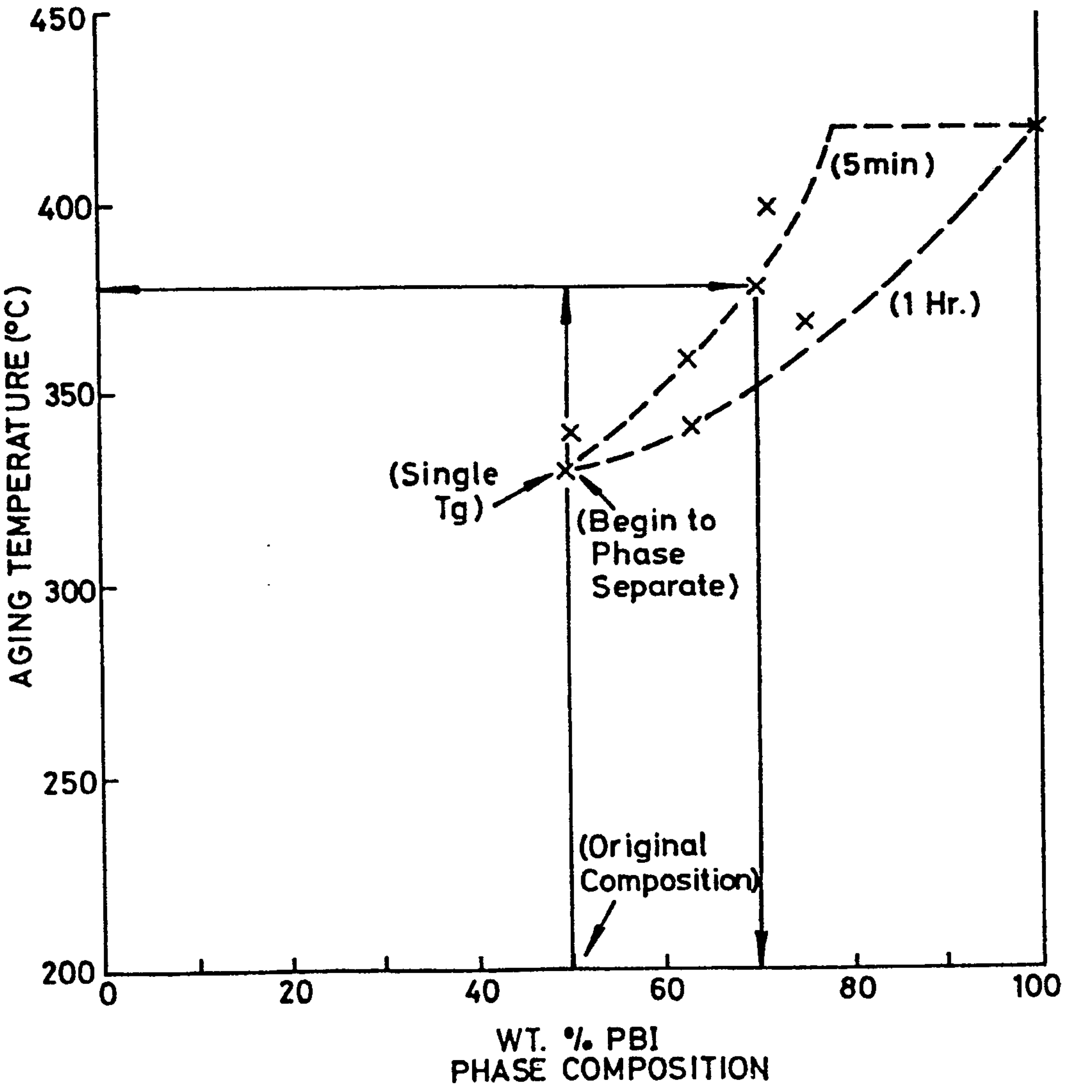

FIG.8

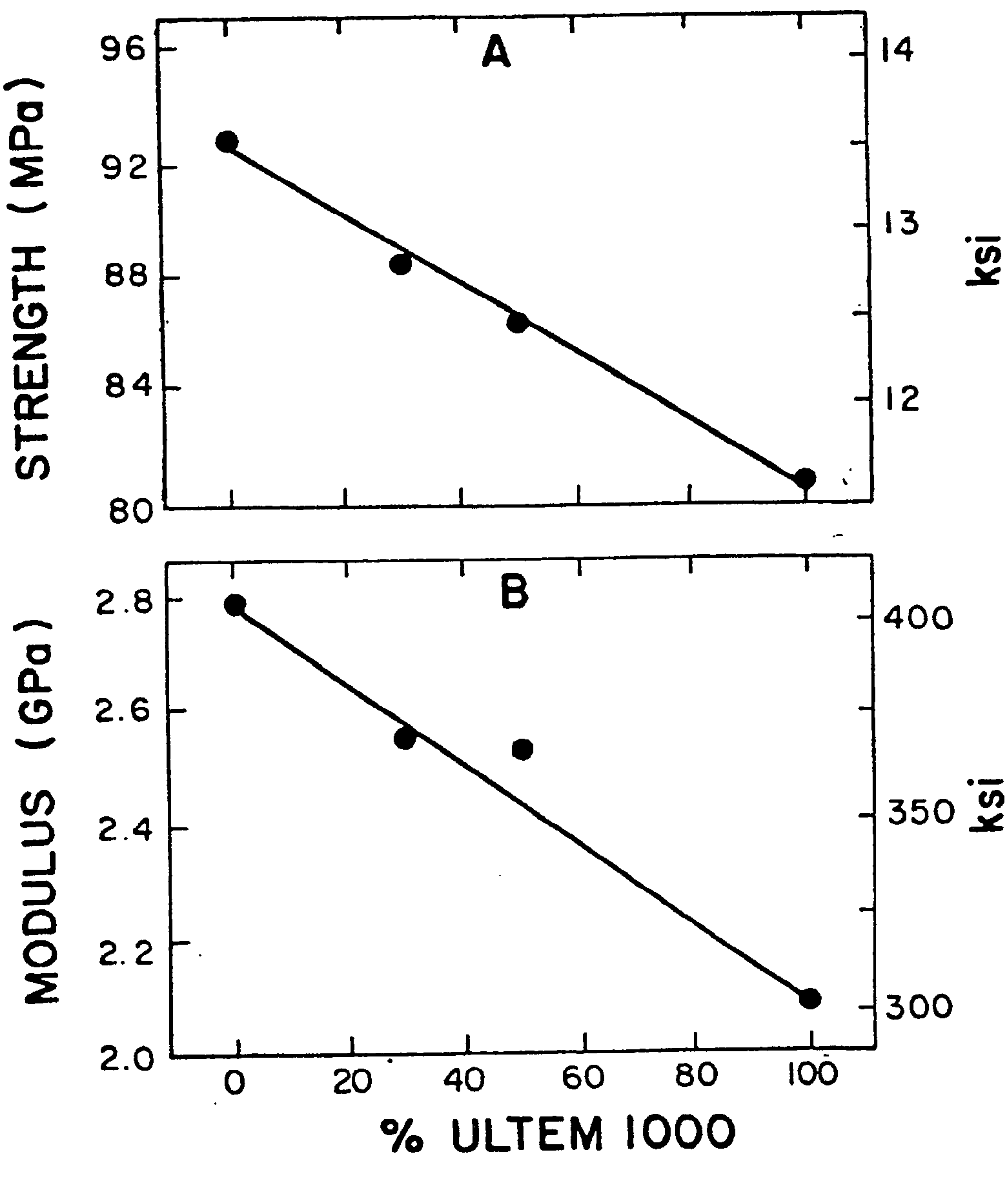
A
B
STRENGTH (MPa)
96
92
88
84
80
14
13
12
ksi
MODULUS (GPa)
2.8
2.6
2.4
2.2
2.0
400
350
300
ksi
0
20
40
60
80
100
% ULTEM 1000

FIG.9